(19)

Europäisches
Patentamt
European
Patent Office
Office européen
des brevets

(11) **EP 4 718 843 A1**

(12) **EUROPEAN PATENT APPLICATION**

(43) Date of publication:
**01.04.2026 Bulletin 2026/14**

(21) Application number: **24315445.7**

(22) Date of filing: **27.09.2024**

(51) International Patent Classification (IPC):
**H04N 19/119** (2014.01)   **H04N 19/176** (2014.01)
**H04N 19/70** (2014.01)   **H04N 19/96** (2014.01)

(52) Cooperative Patent Classification (CPC):
**H04N 19/119; H04N 19/176; H04N 19/70;
H04N 19/96**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing Beijing 100085 (CN)**

(72) Inventors:
• **Tissier, Alexandre
Beijing, 100085 (CN)**
• **Ghaznavi Youvalari, Ramin
Beijing, 100085 (CN)**
• **Abdoli, Mohsen
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PARTITIONING OF ONE OR MORE BLOCKS OF A PICTURE**

(57) A method of processing one or more blocks of a picture is described. For a current block of the picture it is determined, using prior data from one or more previously coded blocks of the picture, whether or not one or more Multi-Type Tree, MTT, splits are to performed.

determining for a current block of the picture, using prior data
from one or more previously coded blocks of the picture,
whether or not one or more Multi-Type Tree, MTT, splits are to
performed
— S200

Fig. 16

EP 4 718 843 A1

## Description

### Technical Field

The present disclosure generally relates to the field of encoding/decoding pictures, images or videos, more specifically to a splitting or partitioning of one or more blocks of a picture. Embodiments of the present disclosure concern the use of prior data available from previously coded blocks to determine whether or not MTT splits are to be performed for MTT restricted or MTT unrestricted.

### Background

The encoding and decoding of a picture, an image or a video is performed in accordance with a certain standard, for example, in accordance with the advanced video coding, AVC standard (see reference [1]), the high efficiency video coding, HEVC, standard (see reference [2]) or the versatile video coding, VVC, standard (see reference [3]).

For encoding and decoding of a picture, during prediction one or more blocks of a picture may be split or partitioned in to sub-blocks, which are used for the prediction.

Thus, there is a need to provide further improvements for splitting or partitioning of one or more blocks of a picture that may be applied for encoding and decoding of a picture, an image or a video.

### Summary

The present disclosure provides a method of processing one or more blocks of a picture, comprising: determining for a current block of the picture, using prior data from one or more previously coded blocks of the picture, whether or not one or more Multi-Type Tree, MTT, splits are to performed.

Optionally, the current block allows only a predefined or signaled number of MTT splits.

Optionally, the number of consecutive MTT splits is one and the current block allows a MTT split only once so that, when the MTT split is performed on the block, no further split of any sub-block created by the MTT split is allowed.

Optionally, the current block is a MTT restricted block.

Optionally, the prior data is compared to a certain threshold for determining whether or not the one or more MTT splits are applicable on the current block, and the prior data represent one or more parameters of a previously coded block.

Optionally, the prior data is compared according to a process (a) or according to a process (b) or according to a process (c) or according to a process (d),

wherein according to a process (a):

- only one parameter is obtained from only one previously coded block,
- the parameter is compared to the certain threshold, and
- no MTT split is applied on the current block when the parameter is inferior to the certain threshold,

wherein according to a process (b):

- two or more parameters are obtained from only one previously coded block,
- the parameters are compared to respective certain thresholds associated with the parameters, and
- no MTT split is applied on the current block when

  ∘ all of the parameters are inferior to the respective certain thresholds, or
  ∘ one or more but not all of the parameters are inferior to the respective certain thresholds, or
  ∘ only one of the parameters is inferior to the respective certain thresholds,

wherein according to a process (c):

- at least one parameter is obtained from each of two or more previously coded blocks,
- the parameters are compared to respective certain thresholds associated with the parameters, and
- no MTT split is applied on the current block when

  ∘ all of the parameters are inferior to the respective certain thresholds, or
  ∘ one or more but not all of the parameters are inferior to the respective certain thresholds, or
  ∘ only one of the parameters is inferior to the respective certain thresholds,

wherein according to a process (d):

- wherein the same parameter is obtained from each of two or more previously coded block,
- wherein the parameters are combined for obtaining a combined parameter, e.g., by determining a mean value or a median value of the parameters,
- the combined parameter is compared to a certain threshold associated with the combined parameters, and
- no MTT split is applied on the current block when the combined parameter is inferior to the certain threshold.

Optionally, the one or more parameters of the previously coded block comprises one or more of the following:

- one or more horizontal parameters, like a width of the previously coded block,
- one or more vertical parameters, like a height of the previously coded block,
- a depth of the previously coded block,
- an intra prediction mode used during coding of the previously coded block,
- one or more reconstructed pixels of the previously coded block.

Optionally,

the certain threshold is between a maximal parameter value and a minimal parameter value, and
the certain threshold is defined in a specification of a codec used for processing the block or is signaled in a data stream, like a bitstream, including data representing the picture, e.g., at a Sequence Parameter Set, SPS, level or at a Picture Parameter Set, PPS, level.

Optionally, the certain threshold is defined based on

- the direction of the split, e.g., for horizontal and vertical MTT splits , and/or
- the MTT split, e.g., split-wise.

Optionally, the method further comprises:

- responsive to determining that one or more or all of the MTT splits are applicable on the current block, applying the one or more or all MTT splits on the current block, setting associated MTT partitioning flags for the current block to a value indicating that MTT partitioning is applied on the current block, e.g., one or more of a split_qt_flag, a mtt_split_cu_vertical_flag and a mtt_split_cu_binary_flag, and including the MTT partitioning flags into a data stream,
- responsive to determining that one or more or all of the MTT splits are not applicable on the current block,

  ◦ not applying the one or more or all MTT splits on the current block, and not including associated MTT partitioning flags into the data stream, or
  ◦ not applying the one or more or all MTT splits on the current block, setting associated MTT partitioning flags for the current block to a value indicating that MTT partitioning is not applied on the current block, and including the MTT partitioning flags into the data stream.

Optionally, the method further comprises:

- receiving a data stream, like a bitstream, including data representing the current block,
- responsive to determining that one or more or all of the MTT splits are applicable on the current block, parsing the data stream for associated MTT partitioning flags for the current block, e.g., one or more of a split_qt_flag, a mtt_split_cu_vertical_flag and a mtt_split_cu_binary_flag, and applying the one or more or all MTT splits on the current block according to the parsed MTT partitioning flags,
- responsive to determining that one or more of the MTT splits are not applicable on the current block,

  ◦ not parsing the data stream for associated MTT partitioning flags for the current block, and not applying the one or more or all MTT split on the current block, or
  ◦ parsing the data stream for MTT partitioning flags for the current block, and not applying the MTT splits associated with MTT partitioning flags having a value indicating that no MTT partitioning is applied.

Optionally,

- the current block is a block eligible for non-MTT splitting, e.g., QT splitting, and
- the determination whether or not one or more MTT splits are to performed is enabled only when a number of coding units, CUs, which is obtainable by partitioning the current block by non-MTT splitting, is equal to or less than of a predefined or signaled threshold.

Optionally, responsive to the number of CUs being greater than the predefined or signaled threshold,

- not applying any MTT split on the current block,
- setting a MTT partitioning flag for the current block, e.g., a split_qt_flag, to a value indicating that no MTT partitioning is applied on the current block, and
- including the MTT partitioning flag into a data stream.

Optionally, the one or more previously coded blocks of the picture comprise one or more neighboring blocks of the current block, and the neighboring blocks comprise:

- two blocks adjacent to the current block and closest to a top-left pixel of the current block, e.g., a first adjacent block on a top of the current block and a second adjacent block on a left of the current block, or
- all blocks adjacent to the current block and located on a top of the current block and on a left of the current block, or
- one or more blocks from coding tree units, CTUs, which are adjacent to the current block and located on a top-left of the current block, on a top of the current block and on a left of the current block.

The present disclosure provides a non-transitory computer-readable storage medium comprising instructions which, when executed by a computer, cause the computer to carry out the inventive method.

The present disclosure provides an apparatus of processing one or more blocks of a picture, the apparatus comprising:
a processing module for determining for a current block of the picture, using prior data from one or more previously coded blocks of the picture, whether or not one or more Multi-Type Tree, MTT, splits are to performed.

The technical solutions provided according to embodiments of the present disclosure have the following beneficial effects.

In prior art approaches, MTT splits may be subject to a lead restriction. However, during an encoding process, e.g., when a current block has a deep partitioning, applying a leaf restriction for the MTT splits may be sub-optimal.

Embodiments of the present disclosure addresses the above drawbacks or shortcomings, by using prior data available from previously coded blocks to determine whether or not MTT splits are to be performed for MTT restricted or MTT unrestricted. The removal of MTT splits under certain conditions may improve encoding/decoding time and the compression efficiency. Stated differently, the inventive approach suggests the utilizing prior data for deciding on partitioning restrictions for a current block.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| Fig. 1 | is a block diagram of a conventional video encoder; |
| --- | --- |
| Fig. 2 | is a block diagram of a conventional video decoder; |
| Fig. 3(a)-Fig. 3(E) | illustrate five splitting modes including a quadtree mode and four multi-type tree modes; |
| Fig. 4 | illustrates an example of a CTU divided into multiple CUs using a quadtree and nested multi-type tree coding block structure; |
| Fig. 5 | illustrates a signaling mechanism of partition splitting information in a quadtree with nested multi-type tree coding tree structure; |
| Fig. 6 | illustrates a flow diagram for enabling a set of new split modes for MTT restricted blocks that are currently disallowed normatively; |
| Fig. 7 | illustrates a flow diagram of a applying a set of constraints to the split process of Fig. 7 and the blocks resulting from those splits; |
| Fig. 8 | illustrates a flow diagram of a third embodiment of jointly processing one or more blocks of a picture according to Fig. 6 and Fig. 7; |

## EP 4 718 843 A1

| | | |
|---|---|---|
| Fig. 9 | illustrates splits that are made available for MTT restricted blocks in accordance with the process of Fig. 6; | |
| Fig. 10 | illustrates enabling both a binary split (BT) and a ternary split (TT) at MTT restricted blocks; | |
| Fig. 11(A)-Fig. 11(B) | illustrate enabling only binary splits (BTs) or only ternary splits (TTs) at MTT restricted blocks; | |
| Fig. 12 | illustrates a partitioning process with leaf restriction for MTT restricted blocks / MTT unrestricted blocks; | |
| Fig. 13 | illustrates a partitioning process which limits the MTT partitioning to a small number of consecutive splits for MTT restricted blocks / MTT unrestricted blocks; | |
| Fig. 14(A)-Fig. 14(B) | illustrate applying a coding tool restriction on blocks obtained by splitting MTT restricted blocks; | |
| Fig. 15 | illustrates a flow diagram representing a parsing process for partitioning flags; | |
| Fig. 16 | illustrates a flow diagram of a method of processing one or more blocks of a picture in accordance with a embodiments of the present disclosure. | |
| Fig. 17 | illustrates a picture with its current block and an area available for obtaining the prior data to be used for the determination whether or not MTT split(s) are applied to the current block proposed. | |
| Fig. 18(A)-Fig. 18(C) | illustrate embodiments of reference blocks to be used to determine whether or not MTT split(s) are applied to the current block; | |
| Fig. 19 | illustrates an enlarged view of the 64x64 block on the left of the current block in Fig. 18(A); | |
| Fig. 20 | illustrates a flow diagram of a partitioning process employing a leaf restriction; | |
| Fig. 21 | illustrates a parsing process in accordance with embodiments of the present disclosure; | |
| Fig. 22 | illustrates a flow diagram of an early termination process of MTT splits on eligible blocks in accordance with embodiments of the present disclosure. | |
| Fig. 23 | illustrates a flow diagram of a method for decoding an encoded data stream in accordance with an embodiment; | |
| Fig. 24 | illustrates a flow diagram of a method for encoding a picture into an encoded data stream, in accordance with an embodiment; | |
| Fig. 25 | illustrates a block diagram of an apparatus of processing one or more blocks of a picture in accordance with an embodiment of the present disclosure; | |
| Fig. 26 | illustrates a block diagram of a decoder for decoding an encoded data stream in accordance with embodiments of the present disclosure; | |
| Fig. 27 | illustrates a block diagram of an encoder for encoding a picture into an encoded data stream in accordance with embodiments of the present disclosure; | |
| Fig. 28 | illustrates a data stream in accordance with embodiments of the present disclosure; and | |
| Fig. 29 | illustrates a block diagram illustrating an electronic device according to embodiments of the present disclosure. | |

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Encoder

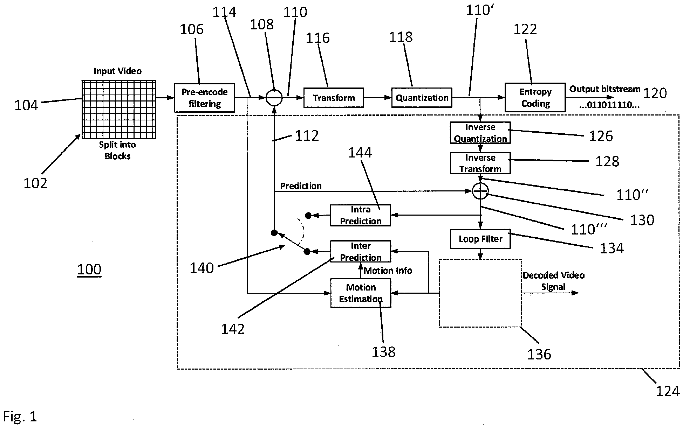

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the. current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110''' that may serve as a reference data for predicting future CUs or blocks to encode. The quantized transform coefficients 110' are de-quantized and inverse transformed leading to a decoded prediction CU or block 110'', and the decoded prediction residuals and the predicted block are then combined at 130, typically summed, so as to provide the reconstructed block or CU 110''''. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

Decoder

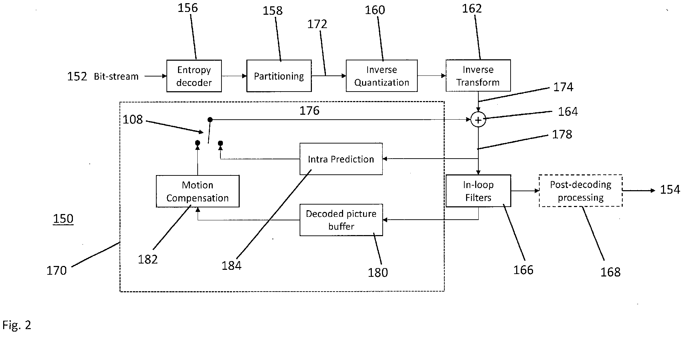

Fig. 2 is a block diagram of a video decoder 150 for predictively decoding from a data or bit stream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bit stream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units (CTUs), typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 1768 The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

Partitioning process

When processing pictures, e.g., by the above-described encoder or by the above-described decoder, one or more pictures may be divided into a sequence of CTUs. For example, for a picture that has three sample arrays, a CTU may include of a N×N block of luma samples together with two corresponding blocks of chroma samples. The partitioning process is then applied on each CTU using pre-defined splits.

Related splits in JVET

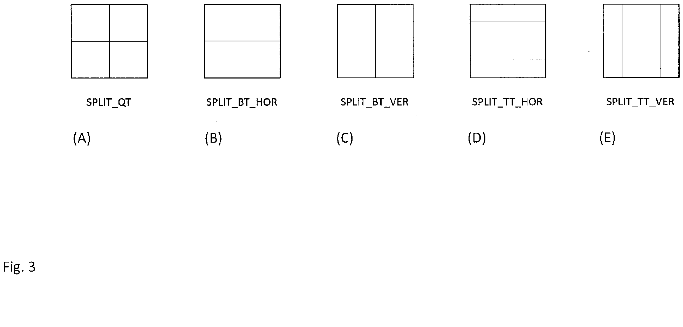

As introduced with the VVC standard, a quaternary-tree structure with nested multi-type tree, MTT, using binary and ternary splits segmentation structure replaces the concepts of multiple partition unit types. The quaternary-tree structure removes the separation of the Coding Unit (CU), the Prediction Unit (PU) and the Transform Unit (TU) concepts except as needed for CUs that have a size too large for a maximum transform length. The quaternary-tree structure supports more flexibility for the CU partition shapes. In the coding tree structure, a CU can have either a square or rectangular shape. The coding tree unit (CTU) is first partitioned by a quaternary tree (also referred to as a quadtree) structure. Then the quaternary tree leaf nodes can be further partitioned by a multi-type tree, MTT, structure. Fig. 3 illustrates five splitting modes including a quadtree (SPLIT_QT) mode as illustrated in Fig. 3(A) and four multi-type tree modes as illustrated in Fig. 3(B) to Fig. 3(E). The four splitting types in multi-type tree structure include a horizontal binary splitting (SPLIT_BT_HOR) as illustrated in Fig. 3(B), a vertical binary splitting (SPLIT_BT_VER) as illustrated in Fig. 3(C), a horizontal ternary splitting (SPLIT_TT_HOR) as illustrated in Fig. 3(D), and a vertical ternary splitting (SPLIT_TT_VER) as illustrated in Fig. 3(E). The multi-type tree leaf nodes are called coding units (CUs), and unless the CU is too large for. the maximum transform length, this segmentation is used for prediction and transform processing without any further partitioning. This means that, in most cases, the CU, PU and TU have the same block size in the quadtree with nested multi-type tree coding block structure. The exception occurs for instance when a maximum supported transform length is smaller than the width or height of the color component of the CU.

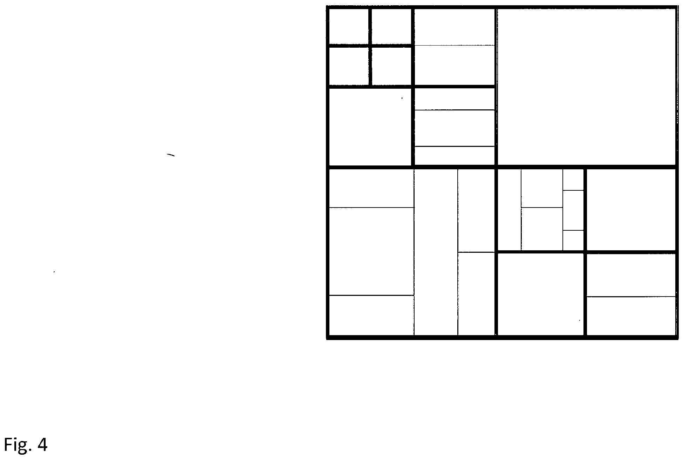

Fig. 4 illustrates an example of a CTU divided into multiple CUs with a quadtree and nested multi-type tree coding block structure. The bold block edges represent a quadtree partitioning and the remaining edges represent a multi-type tree partitioning. The quadtree with nested multi-type tree partition provides a content-adaptive coding tree structure comprised of CUs. The size of the CU may be as large as the CTU or as small as 4×4 in units of luma samples. For the case of a 4:2:0 chroma format, the maximum chroma coding block (CB) size is 64×64 and the minimum size chroma CB includes 16 chroma samples. In VVC, the maximum supported luma transform size is 64×64 and the maximum supported chroma transform size is 32×32. When the width or height of the CB is larger the maximum transform width or height, the CB is automatically split in the horizontal and/or vertical direction to meet the transform size restriction in that direction.

The following parameters are defined for the quadtree with nested multi-type tree coding tree scheme. These parameters are specified by SPS syntax elements and can be further refined by picture header syntax elements.

- CTU size:          the root node size of a quaternary tree
- MinQTSize:         the minimum allowed quaternary tree leaf node size
- MaxBtSize:         the maximum allowed binary tree root node size
- MaxTtSize:         the maximum allowed ternary tree root node size
- MaxMttDepth:       the maximum allowed hierarchy depth of multi-type tree splitting from a quadtree leaf
- MinCbSize:         the minimum allowed coding block node size

In one example of the quadtree with nested multi-type tree coding tree structure, the CTU size is set as 128×128 luma samples with two corresponding 64×64 blocks of 4:2:0 chroma samples, the MinQTSize is set as 16×16, the MaxBtSize is set as 32×32 and MaxTtSize is set as 32×32, the MinCbsize (for both width and height) is set as 4×4, and the MaxMttDepth is set as 3. The quaternary tree partitioning is applied to the CTU first to generate quaternary tree leaf nodes. The quaternary tree (QT) leaf nodes may have a size from 16×16 (i.e., the MinQTSize) to 64×64. If the leaf QT node is 64×64, it will not be further split by the binary tree since the size exceeds the MaxBtSize and MaxTtSize (i.e., 32x32).

Otherwise, the leaf quadtree node may be further partitioned by the multi-type tree. Therefore, the quaternary tree leaf node is also the root node for the multi-type tree and it has a multi-type tree depth (mttDepth) as 0. When the multi-type tree depth reaches MaxMttDepth (i.e., 3), no further splitting is considered. When the multi-type tree node has a width equal to MinCbsize, no further horizontal splitting is considered. Similarly, when the multi-type tree node has a height equal to MinCbsize, no further vertical splitting is considered.

In VVC, the coding tree scheme supports the ability for the luma and chroma to have a separate block tree structure. For P and B slices, the luma and chroma CTBs in one CTU have to share the same coding tree structure. However, for I slices, the luma and chroma can have separate block tree structures. When separate block tree mode are applied, the luma CTB is partitioned into CUs by one coding tree structure, and the chroma CTBs are partitioned into chroma CUs by another coding tree structure. This means that a CU in an I slice may include a coding block of the luma component or coding blocks of two chroma components, and a CU in a P or B slice always includes coding blocks of all three color components unless the video is monochrome.

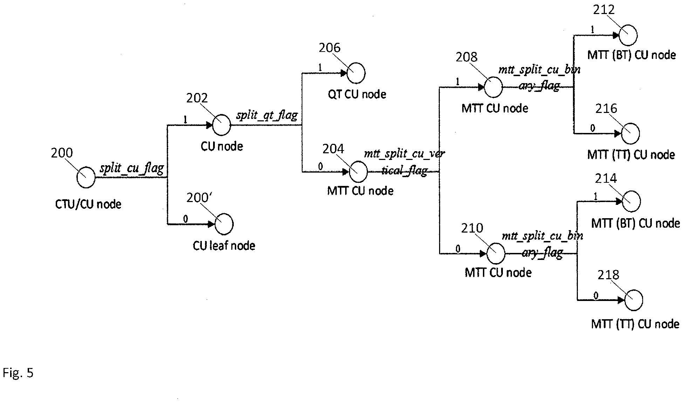

Fig. 5 illustrates the signaling mechanism of partition splitting information in a quadtree with nested multi-type tree coding tree structure. A coding tree unit (CTU) 200 is treated as the root of a quaternary tree and is first partitioned by a quaternary tree structure. Each quaternary tree leaf node 202 (being sufficiently large to allow it) is then further partitioned by a multi-type tree structure. In quadtree with nested multi-type tree coding tree structure, for each CU node 200, a first flag (split_cu_flag) is signaled to indicate whether the node 200 is further partitioned. If not, CU node 200 is a CU leaf node 200'. If the current CU node, like node 202, is a quadtree CU node, a second flag (split_qt_flag) is signaled to indicate whether it is a QT partitioning node 204 or a MTT partitioning node 206. When a node, like node 204, is partitioned with using the MTT partitioning mode, a third flag (mtt_split_cu_vertical_flag) is signaled to indicate the splitting direction, a vertical splitting resulting in node 208 (mtt_split_cu_vertical_flag = 1) and a horizontal splitting resulting in node 210 (mtt_split_cu_vertical_flag = 0). Then a fourth flag (mtt_split_cu_binary_flag) is signaled to indicate whether the split is a binary split or a ternary split, a binary splitting resulting in nodes 212 and 214, respectively, (mtt_split_cu_binary_flag = 1) and a ternary splitting resulting in nodes 216 and 218, respectively, (mtt_split_cu_binary_flag = 0).

Based on the values of mtt_split_cu_vertical_flag and mtt split cu binary_flag, the multi-type tree splitting mode (MttSplitMode) of a CU is derived as shown in Table 1.

Table 1: MttSplitMode derivation based on multi-type tree syntax elements

| MttSplitMode | mtt_split_cu_vertical_flag | mtt_split_cu_binary_flag |
|---|---|---|
| SPLIT_TT_HOR | 0 | 0 |
| SPLIT_BT_HOR | 0 | 1 |
| SPLIT_TT_VER | 1 | 0 |
| SPLIT_BT_VER | 1 | 1 |

Under specific conditions some flags are not sent. For instance, when MTT is not available on a large block size only the split_cu_flag is sent as the split selection is unnecessary. The split_qt_flag may be implicitly defined as 1 for indicating that MTT is not available.

MTT Splits of MTT restricted blocks

A multi-type tree, MTT, structure may be restricted based on the conditions described above. For example, for blocks having specific sizes only the quad-tree is enabled but no MTT, i.e., MTT is not available for such blocks. For example, European patent application 24315306.1, "Method and apparatus for partitioning of one or more blocks of a picture", filed on June 25, 2024, which is hereby incorporated by reference, describes the processing one or more blocks of a picture which allows or enables one or more MTT splits for one or more of the MTT restricted block, e.g., binary and ternary splits, which may be both horizontal and vertical, may to be used on MTT restricted blocks

In this disclosure, a block which, conventionally or in accordance with existing codecs or specifications, does not allow for MTT splits, e.g., the just-mentioned blocks having specific sizes, is referred to as a MTT restricted block, e.g., blocks which in accordance with an existing codec do not allow MTT splits. For instance, currently in the ECM codec, for all intra configurations, blocks larger than or equal to 64x64 are MTT restricted blocks. On the other hand, a block which allows for a MTT split, is referred to as MTT unrestricted blocks, e.g., blocks which in accordance with an existing codec allow MTT splits, like blocks smaller than to 64x64 in the ECM codec.

Further, the term sub-block or sub-CU refers to blocks created by a division of a block through any existing splits. For instance, based on a block of size 2Nx2N a quadtree split will create four sub-blocks defined as sub-CUs of size NxN.

In the following description, reference is made to ECM. The present disclosure is not limited to ECM. Rather, the concepts described herein are applicable to any other codec where the activation of MTT is limited, e.g., to blocks larger or smaller than a certain threshold, or where the activation of MTT is done without any restrictions. For example upper and lower bounds of thresholds for deciding whether MTT is applied or nor may be defined in the specification of the codec, or they may be signaled in the bitstream for example in Sequence Parameter Set (SPS) or Picture Parameter Set (PPS) levels.

The above process has two main aspects. Firstly, a set of new split modes are enabled for MTT restricted blocks that are currently disallowed normatively. Secondly, a set of constraints are applied to the split process and the blocks resulting from those splits.

Fig. 6 illustrates a flow diagram of the first aspect of processing one or more blocks of a picture. The one or more blocks include one or more Multi-Type Tree, MTT, restricted blocks, and the method includes the following:

S 100: Enabling one or more MTT splits for one or more of the MTT restricted blocks.

Fig. 7 illustrates a flow diagram of the second aspect of processing one or more blocks of a picture. The one or more sub-blocks are obtained by applying a MTT split to the one or more blocks, and the method includes the following:

S 102: Applying one or more restrictions to one or more of the sub-blocks obtained by applying a MTT split to the one or more blocks.

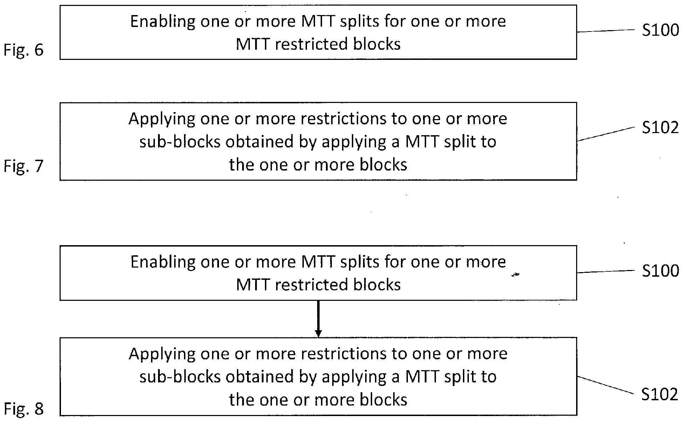

The first and second aspects may be applied separately, as illustrated in Fig. 6 and Fig. 7, or they may be applied both when processing a block of the picture. Fig. 8 illustrates a flow diagram of a joint of processing one or more blocks of a picture using the first and second aspects. The method includes the following:

S 100: Enabling one or more MTT splits for one or more of the MTT restricted blocks.

S 102: Applying one or more restrictions to one or more of the sub-blocks obtained by applying a MTT split to the one or more blocks.

Thus, MTT splits, which include binary splits (BTs) and ternary splits (TTs) are authorized or allowed on MTT restricted blocks. In other words, using BTs and TTs for MTT restricted blocks is normatively allowed. The BTs and TSs may be both horizontal and vertical.

*1st Aspect* - Enabling MTT splits at MTT restricted blocks

The first aspect enables new MTT splits at MTT restricted blocks. Depending on the settings, the new splits may be all or a proper subset of existing MTT splits provided, e.g., by the ECM.

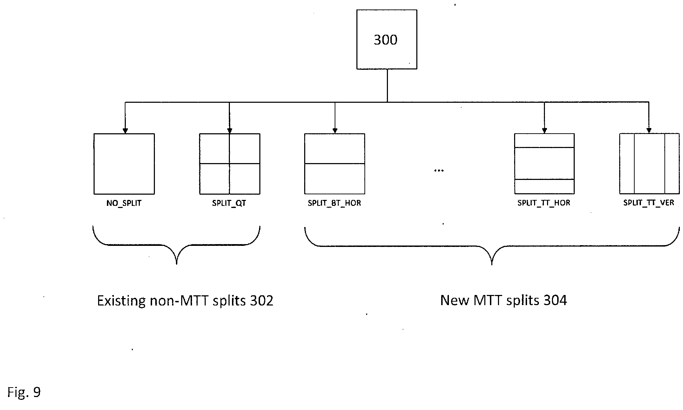

Fig. 9 illustrates splits that are made available for MTT restricted blocks 300 in accordance with the first aspect. Fig. 9 illustrates the existing non-MTT splits 302 of an existing encoding process that may choose between no split and quadtree (SPLIT_QT). Fig. 9 further illustrates the new MTT splits 304 all or some of which may be selected at the MTT restricted blocks 300, e.g., a horizontal binary split (SPLIT_BT_HOR), a vertical binary split (SPLIT_BT_VER), a horizontal ternary split (SPLIT_TT_HOR) and a vertical ternary split (SPLIT_TT_VER).

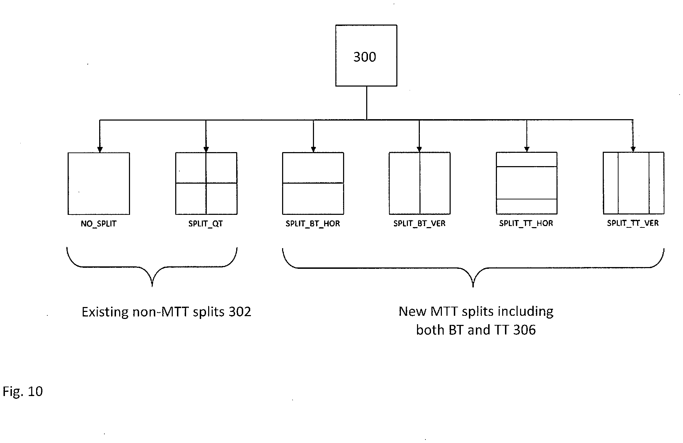

Fig. 10 illustrates an enabling both a binary split (BT) and a ternary split (TT) at MTT restricted blocks 300. Both BT and TT are enabled for the MTT restricted blocks 300. As is illustrated, in addition to the existing non-MTT splits 302, the following new MTT splits 306 are enabled: the horizontal binary split (SPLIT_BT_HOR), the vertical binary split (SPLIT_BT_VER), the horizontal ternary split (SPLIT_TT_HOR) and the vertical ternary split (SPLIT_TT_VER). In other words, all existing splits are now allowed also for MTT restricted blocks 300.

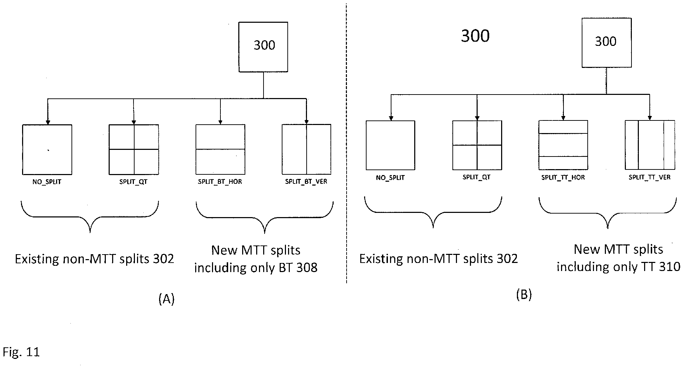

In accordance with examples, only a proper subset of the MTT splits provided by, e.g., ECM may be enabled. Other examples may allow only BT or only TT at MTT restricted blocks. Fig. 11(A) and Fig. 11(B) enabling only BT or only TT at MTT restricted blocks 300. Fig. 11(A) illustrates an example enabling only a BT at MTT restricted blocks 300. As is illustrated, in addition to the existing non-MTT splits 302, only the new MTT splits 308 providing for a binary split are enabled, namely the horizontal binary split (SPLIT_BT_HOR) and the vertical binary split (SPLIT_BT_VER). Fig. 11(B) illustrates an example enabling only TT at MTT restricted blocks 300. As is illustrated, in addition to the existing non-MTT splits 302, only the new MTT splits 310 providing for a ternary split are enabled, namely the horizontal ternary split (SPLIT_TT_HOR) and the vertical ternary split (SPLIT_TT_VER).

*2nd Aspect* - Restricting MTT

The second aspect applies restrictions to MTT on all type of blocks that are possible CUs which may be either MTT restricted blocks or MTT unrestricted blocks, or blocks resulting from splits according to the first aspect, or any other blocks that may be a CU. One or more of the following restrictions may be applied:

(1) A leaf restriction on MTT splits.
(2) A restriction on a number of consecutive MTT splits.

(3) A coding tool restriction on blocks resulting from MTT splits.

The restrictions may be defined in the specification of an underlying codec. In accordance with other examples, the restrictions may be signaled in a data stream, like a bitstream, including data representing the picture, e.g., at a Sequence Parameter Set, SPS, level or at a Picture Parameter Set, PPS, level. For example a number of allowed splits after the MTT splits may be pre-defined or may be indicated in the bitstream.

*Leaf restriction on MTT splits*

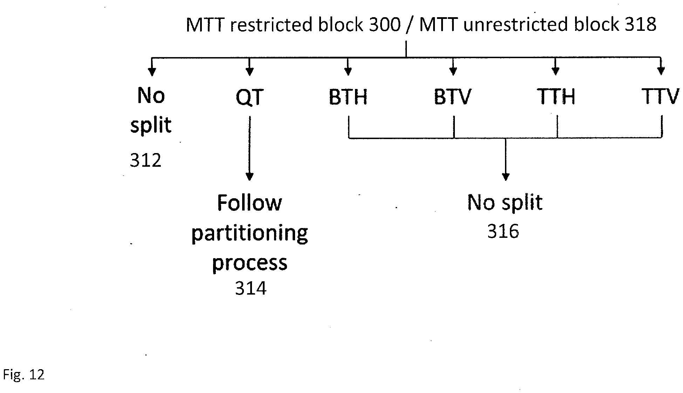

Fig. 12 illustrates a partitioning process with leaf restriction for MTT restricted blocks / MTT unrestricted blocks. In Fig. 12, the MTT splits at MTT restricted block 300 / MTT unrestricted block 318 are shown only schematically as BTH (horizontal binary split), BTV (vertical binary split), TTH (horizontal ternary split) and TTV (vertical ternary split). Fig. 12 further illustrates the existing partitioning process with no split 312 and quadtree which is followed by the encoding process 314. Fig. 12 also illustrates a splitting of the MTT restricted block 300 / MTT unrestricted block 318 according to the first aspect into BTH, BTV, TTH and TTV. In accordance with examples, if one of the MTT splits is selected for the MTT restricted block 300, the CUs defined by those splits are mandatory to be leaves, i.e. if BTH, BTV, TTH or TTV is selected at a MTT restricted block 300 / MTT unrestricted block 318 during the partitioning process, no further splits 316 are allowed on such partitions.

*Restriction on the number of consecutive MTT splits*

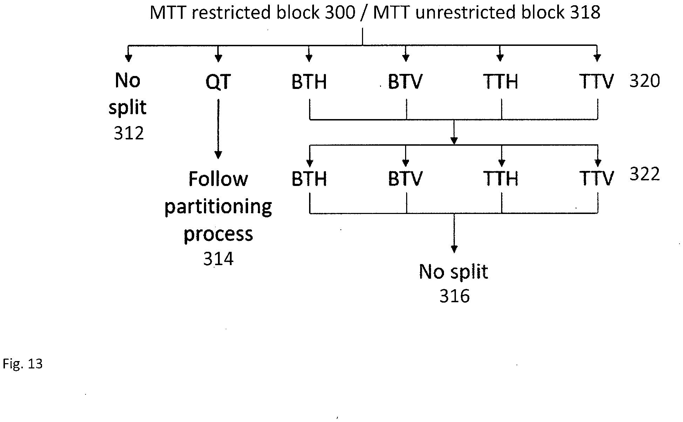

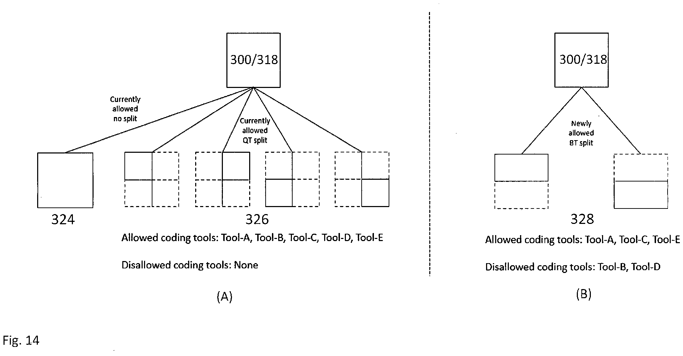

Fig. 13 illustrates a partitioning process which limits the MTT partitioning to a small number of consecutive splits for MTT restricted blocks / MTT unrestricted blocks. In Fig. 14, the MTT splits at MTT restricted block 300 / MTT unrestricted block 318 are shown only schematically as BTH (horizontal binary split), BTV (vertical binary split), TTH (horizontal ternary split) and TTV (vertical ternary split). Fig. 14 further illustrates the existing partitioning process with no split .312 and quadtree which is followed by the encoding process 314. Fig. 14 also illustrates a splitting 320 of the MTT restricted block 300 / MTT unrestricted block 318 according to the first aspect into BTH, BTV, TTH and TTV, followed by a further splitting 322 of the split sub-blocks into BTH, BTV, TTH and TTV. In accordance with examples, a restriction is applied on top of the MTT split 320 on the MTT restricted block 300 / MTT unrestricted block 318 in accordance with the first aspect. If the splits 320 are selected, the further sub-bocks or CUs defined by the splits 320 can only be split once with the MTT splits 322, i.e., if BTH, BTV, TTH or TTV is selected at the MTT restricted block 300 / MTT unrestricted block 318 during the partitioning process only one more split 322 is allowed. After that last split 322, the CUs defined are considered to be leaves.

*Coding tool restriction on block resulting from MTT split*

In accordance with examples, blocks (sub-blocks, sub-CUs) resulting from a MTT split, e.g., sub-blocks with a leaf restriction for MTT restricted blocks may be constrained in terms of coding tools that are allowed.

Fig. 14(A) and Fig. 14(B) illustrate applying a coding tool restriction on blocks obtained by splitting MTT restricted blocks 300 / MTT unrestricted blocks 318. It is assumed that a codec used for processing the picture, e.g., ECM, includes a set of five coding tools, namely coding tools A, B, C, D and E. As is illustrated in Fig. 14(A) all coding tools A-E are allowed for blocks 324 resulting from no split or for blocks 326 resulting from a QT split (currently allowed) at MTT restricted block 300 / MTT unrestricted block 318. However, as is illustrated in Fig. 14(B), two of these coding tools, e.g., B and D, are normatively disallowed for blocks 328 resulting from a new MTT split with a leaf restriction for MTT restricted blocks 300. In the depicted example, only BTH is displayed, however, the described coding tool restriction may be applied to any of the MTT splits BTH, BTV, TTH or TTV independently or to all of the MTT splits BTH, BTV, TTH or TTV together.

*Signaling aspects*

Some signaling aspects are now described, which are associated with the first and/or second aspects described above.

The first aspect allows MTT splits to be processed on MTT restricted blocks. This may require the signaling for such blocks to be modified. For example, on MTT restricted blocks only a split_cu_flag is currently sent and a split_qt_flag is determined implicitly. When allowing MTT splits to be processed on MTT restricted blocks, for specific MTT restricted blocks the signaling of the partitioning may be as is illustrated in Fig. 5, except that the split_qt_flag is not determined implicitly anymore but is signaled explicitly. Also the other flags related to the partitioning are signaled explicitly.

The second aspect restricts the MTT splits on all type of blocks that are possible CUs which may be either MTT restricted blocks, or blocks resulting from these newly added splits, or any other blocks that could be a CU (MTT unrestricted blocks). The one or more restrictions may be signaled implicitly or explicitly.

The first restriction, which prevents the partitioning process after BT or TT has been selected, may be signaled implicitly or explicitly.

- Implicit signaling:

  When BT or TT is selected two or three sub-CUs, respectively, are created. Those sub-CUs are determined to be leaves of the tree, i.e., no more splits are available.
  The following partitioning signaling can be done implicitly by setting the split_cu_flag to 0.

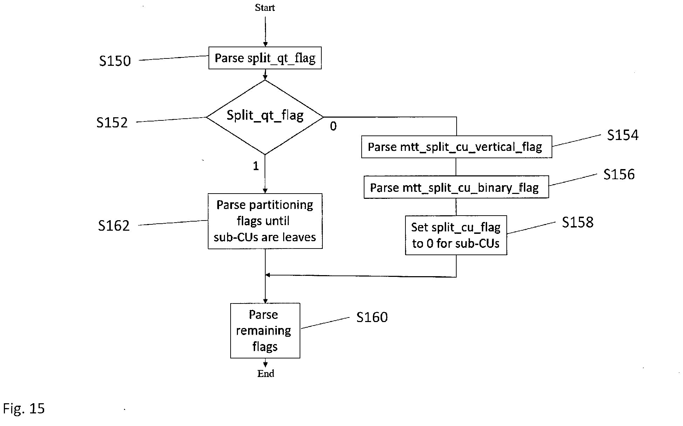

Fig. 15 illustrates a flow diagram representing a parsing of partitioning flags. The process starts with the parsing S 150 of the split_qt_flag, e.g., from a bitstream. At S152 it is determined whether the split_qt flag is 0 or 1. When the split_qt_flag is 0, the mtt_split_cu_vertical_flag is parsed S154 and the mtt_split_cu_binary_flag is parsed S156. Then the split_cu_flag is set S158 to 0 implicitly for the one or more sub-CUs created by the split selected. The process than proceeds with the parsing S160 of the remaining flags. When the split_qt_flag is 1, the process parses S160 all flags until all sub-CUs are leaves, and then proceeds to S160.

- Explicit signaling:
  The signaling of the sub-CUs created by a BT or a TT split may also be done explicitly. For example, the split_cu_flag value may be signaled explicitly in the bitstream.

The second restriction, which prevents the partitioning process after a restricted number of consecutive MTT splits, may be signaled implicitly or explicitly. The signaling may be performed similar to the signaling of the first restriction but only for the last split possible. For example, if the second MTT split is defined as the last of the consecutive splits possible, then the one or more sub-CUs may be signaled either implicitly in the way as presented above (see also Fig. 15) or explicitly.

The third restriction, which modifies the coding tools available on blocks resulting from MTT, may signal the coding tools either implicitly or explicitly.

- Implicit signaling:

  The coding tools that are not processed may be deduced implicitly as 0. This may be implemented hard coded. For example, if there is a 128x128 block which performs a binary split, TIMD or any other tools may be disallowed both at the encoder side and
  at the decoder side. The other coding tools that are processed may be signaled as usual.

- Explicit signaling:
  All coding tools, both the ones that are processed and the ones that not processed, for blocks resulting from an MTT split, may be signaled explicitly.

In the above described approach, MTT splits are made available in MTT restricted blocks. The new MTT splits may be restricted to generate leave nodes, e.g., when a leaf restriction on MTT splits or a restriction on a certain number of MTT splits applies. The leaf restriction on MTT splits may be considered a special case of the restriction on a number of MTT splits, namely a restriction to a single or one MTT split. Also the leaf restriction on MTT splits may be considered a special case of the restriction on a number of consecutive MTT splits, namely a restriction to no or zero consecutive MTT splits. This restriction may be particularly efficient for blocks which are close to their leaves.

However, during an encoding process, e.g., when a current block has a deep partitioning, i.e., several splits in a row (more that the restricted number of MTT splits) are applied to the block, MTT splits limited to be leaves may be sub-optimal. Stated differently, when considering, e.g., the approach disclosed in the above-referenced European patent application 24315306.1, there may be any situations when such an approach may not be beneficial.

For addressing such shortcomings, the present disclosure suggests to use prior data available from previously coded blocks to determine whether or not MTT splits are to be performed for MTT restricted or MTT unrestricted. Stated differently, the present disclosure provides an approach of processing a current block of a picture, the process using prior data from one or more previously coded blocks of the picture for determining whether or not one or more Multi-Type Tree, MTT, splits are to performed for the current block.

The inventive approach is based on the finding that disabling MTT splits, when they are restricted to be leaves and when they will not be selected as the final partitioning, improves both the encoding/decoding time and compression efficiency. In accordance with embodiments, the removal of MTT splits under certain conditions may be performed normatively or non-normatively. The normative approach improves both the encoding/decoding time and the compression efficiency. The non-normative approach reduces the encoding/decoding time.

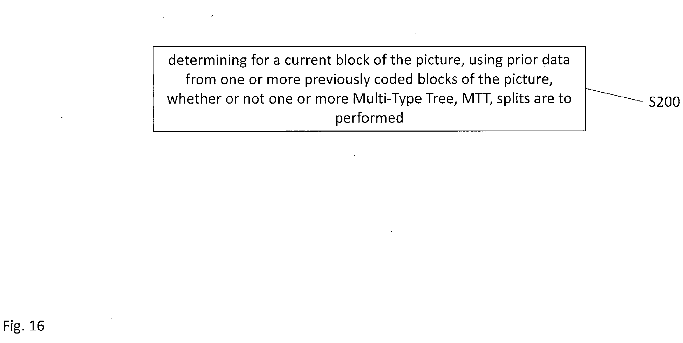

Fig. 16 illustrates a flow diagram of a method of processing one or more blocks of a picture in accordance with a embodiments of the present disclosure. The method includes the following:

S200: Determining for a current block of the picture, using prior data from one or more previously coded blocks of the picture, whether or not one or more Multi-Type Tree, MTT, splits are to performed.

In accordance with the inventive approach, certain prior data from previously . coded blocks are used to determine if MTT splits are applicable on a current block. In accordance with embodiments, the prior data may be derived from neighboring blocks, where neighboring blocks may be, e.g., the adjacent blocks on top and/or left of the current block. The prior data may be one or more of the codec's decisions for coding one or more of the blocks in the neighborhood of the current block. For example, the prior data may be a width and height of a neighboring block, or a partitioning depth of a neighboring block. To determine if MTT splits are applied or not, the selected prior data may be compared to a certain threshold.

In accordance with embodiments, the determination whether or not MTT split(s) are applied to the current block, is performed only on certain blocks, also referred to herein as eligible blocks, namely blocks allowing only for one MTT split (e.g., when the above described leaf restriction is applied), or allowing a certain number of MTT splits with the last generated sub-block being a leaf node.

Thus, in accordance with embodiments, the MTT splits, e.g., BT and TT splits that may be both horizontal and vertical, may be restricted for eligible blocks. In other words, the use of the MTT splits for eligible blocks may be normatively disallowed.

In accordance with embodiments, a value of a flag, like the split_qt_flag, may be implicitly deduced from a data stream or bitstream to a value, like "1", indicating that not MTT split(s) are performed on the current block, when the inventive determination applied on an eligible block yields that no MTT split(s) are applied to the current block, i.e., when it is determined from the prior data that no MTT split is to be applied. For example, the determination (also referred to herein as "implicit decision") may determine if QT and MTT splits are applied on an eligible block or only a QT split is applied on an eligible block.

In accordance with embodiments, the split_qt_flag is explicitly signaled in the bitstream for an eligible block, when the inventive determination applied on an eligible block yields that no MTT split(s) are applied to the current block.

In accordance with embodiments, the prior data, which is used to determine whether or not MTT split(s) are applied to the current block, is obtained from blocks (also referred to herein as reference blocks) on top and left of the current block. These two blocks are the closest one to the top left of the current block.

In accordance with embodiments, the reference blocks are all the adjacent blocks on top and left of the current block.

In accordance with embodiments, the reference blocks are within the 64x64 blocks on top-left, top, top-right, left and bottom-left of the current block.

In accordance with embodiments, the prior data of the reference blocks, which is used to determine whether or not MTT split(s) are applied to the current block, is the width and height of the reference blocks.

In accordance with embodiments, the prior data of the reference blocks, which is used to determine whether or not MTT split(s) are applied to the current block, is the depth.

In accordance with embodiments, the inventive determination yields that no MTT split(s) are applied, when all the selected prior data are inferior to a threshold.

In accordance with embodiments, the inventive determination is applied only on horizontal MTT splits when the selected prior data related to a horizontal parameter is inferior to a threshold.

In accordance with embodiments, the inventive determination is applied only on vertical MTT splits when the selected prior data related to a vertical parameter is inferior to a threshold.

In accordance with embodiments, the inventive determination is applied only if one of the selected prior data is inferior to the threshold.

In accordance with embodiments, a threshold for deciding whether the inventive determination is applied on an eligible block is defined based on a size of the current block.

In accordance with embodiments, specific thresholds are defined based on the direction of the split.

In accordance with embodiments, specific thresholds are defined based on the split.

In accordance with embodiments, a parent block of an eligible block may be a block which has not processed a MTT split, i.e., the parent block may be the root of the coding tree or a QT split.

As mentioned above, embodiments are performed on top of an eligible block for which only one MTT split is allowed. In such embodiments blocks may be compared depthwise or size-wise which may not be possible when a maximal MTT depth is higher than one.

In accordance with embodiments, compared to a current version of ECM14.0 under All Intra configuration, some MTT restricted blocks are added for a certain size of a block. On top of that, MTT splits may be defined implicitly on eligible block, i.e., it is determined if QT and MTT splits or only a QT split are processed on an eligible block. For examples, flags for one or more MTT splits may be deduced implicitly, e.g., as "0" so that no MTT splits are processed, or as "1" so that MTT splits are processed.

In the present disclosure, reference is made to ECM as an underlying codec, however the inventive concept is applicable to other codecs where a maximal MTT depth is defined for specific blocks to a certain value, like one. The basis for the inventive determination as well as the thresholds related to the determination may be defined in the specifications of the codec, or they may be signaled in a data stream, like a bitstream, including data representing the picture, e.g., at a Sequence Parameter Set, SPS, level or at a Picture Parameter Set, PPS, level.

In the following, firstly embodiments of reference blocks are described, which are involved to obtain the prior data. Secondly, embodiments of the prior data are described, which is to be compared to thresholds. Thirdly, signaling embodiments are described.. Finally, an embodiment of an encoder-side only early termination is described.

<u>Prior data</u>

The determination whether or not MTT split(s) are applied to the current block proposed by the present disclosure is based on prior data from neighboring blocks. To derive the prior data, different parameters may be defined such as an area (reference blocks or previously coded blocks) involved or a set of prior data (e.g., certain parameters) to be compared to one or more thresholds in order to perform the determination whether or not MTT split(s) are applied to the current block.

*Area*

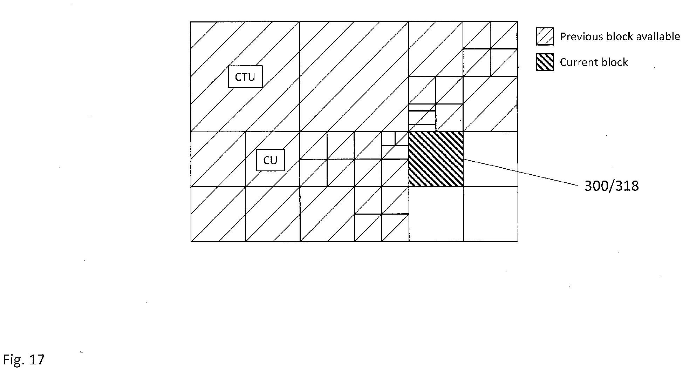

Fig. 17 illustrates a picture with its current block and an area available for obtaining the prior data to be used for the determination whether or not MTT split(s) are applied to the current block proposed. More specifically, Fig. 17 illustrates a picture divided into multiple CTUs, e.g., respective 128x128 blocks. It is noted that the present disclosure is not limited to a CTU size of 128x128 blocks. In accordance with other embodiments, a CTU can have different values based on the configuration files. For instance in high resolution sequences defined as class A in CTC, the CTU size is 256.

Each CTU may be divided into CUs through the above described partitioning process. The densely hatched block (left inclined hatching) is the block being currently processed, e.g., a MTT restricted block 300 or a MTT unrestricted block 318. The widely hatched blocks (right inclined hatching) are the CUs that may be used as a reference or reference block to make the decision about the current block, i.e., to determine whether or not MTT split(s) are applied.

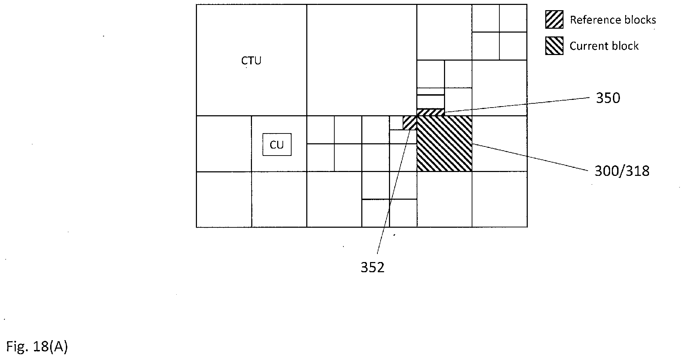

Fig. 18(A) to Fig. 18(C) illustrate embodiments of reference blocks to be used to determine whether or not MTT split(s) are applied to the current block. Fig. 18(A) to Fig. 18(C) represent the picture of Fig. 17 divided into the CTUs, which, in turn, are divided into the CUs. The current block 300/318 is highlighted by the left inclined hatching, and the reference blocks are highlighted by the right inclined hatching. Depending on the partitioning of the previous blocks, the reference blocks may vary in terms of size, going from the CTU size down to 4x4 dimensions.

Fig. 18(A) illustrates an embodiment using only two adjacent reference blocks 350, 352 which are located on top and on left of the current block 300/318. Block 350 is generated by successive splits with the final split being a horizontal ternary split (SPLIT_TT_HOR - see Fig. 3(D)), and block 352 is generated successive splits with the final split being by a vertical binary split (SPLIT_BT_VER - see Fig. 3(C)). Both blocks 350, 352 are the closest blocks to the top-left pixel of the current block 300/318.

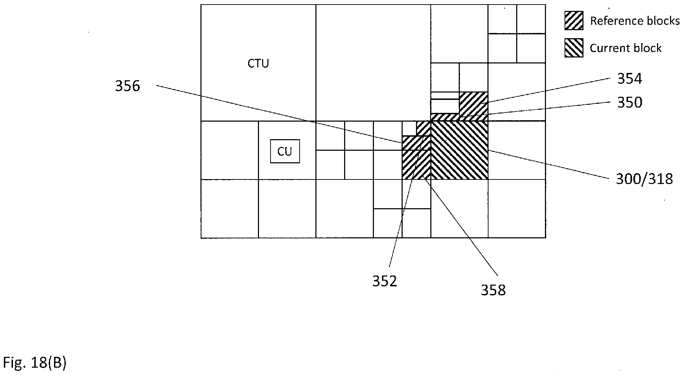

Fig. 18(B) illustrates an embodiment using all the adjacent reference blocks 350 to 358 that are located on top (blocks 350, 354) and on left (blocks 352, 356, 358) of the current block 300/318. Block 354 is generated by successive splits with the final split being a quadtree split (SPLIT_QT - see Fig. 3(A)), block 356 is generated by successive splits with the final split being a horizontal binary split (SPLIT_BT_HOR - see Fig. 3(B)), and block 358 is generated by successive splits with the final split being a quadtree split (SPLIT_QT - see Fig. 3(A)).

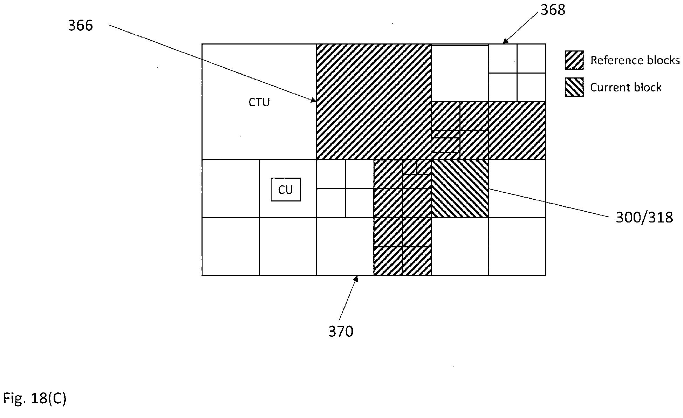

Fig. 18(C) illustrates an embodiment using some or all blocks within the 64x64 blocks or CTUs of the picture of Fig. 17 that are on top-left (CTU 366 - no split), top (lower-left blocks of CTU 368 generated by respective quadtree split), top-right (lower-right block of CTU 368 generated by a quadtree split), left (the upper-right blocks of CTU 370 generated by respective quadtree split) and bottom-left (lower-right blocks of CTU 370 generated by a quadtree split) of the current block 300/318.

Fig. 18(A) to Fig. 18(C) illustrate certain embodiments, however, the present invention is not limited to these embodiments. In accordance with other embodiments, a different set of reference blocks may be selected within the blocks or CTUs available and presented in Fig. 17.

*Selection of prior data*

Embodiments of the present disclosure exploit different prior data from the reference blocks to determine whether or not MTT split(s) are applied to the current block. The selected prior data may be compared to one or more predefined thresholds.

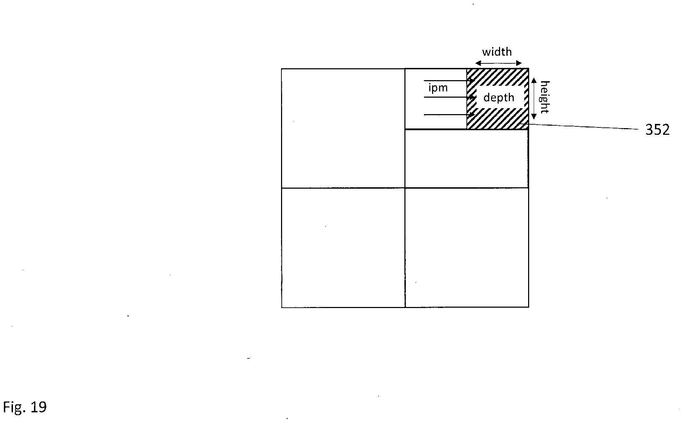

Fig. 19 illustrates an enlarged view of the 64×64 block on the left of the current block 300/318 in Fig. 18(A), more specifically, a view of block 352 described above with reference to Fig. 19. Within the 64×64 block, the top-right block 352 is highlighted by hatching which represents one of the two reference blocks of Fig. 18(A). Several examples for the prior data are depicted, namely a width, a height, a depth and an intra prediction mode (ipm) that may be used as prior data to determine whether or not MTT split(s) are applied to the current block. It is noted that the prior data illustrated in Fig. 19 are examples and that the present disclosure is not limited to this. In accordance with embodiments, some or all prior data related to a reference block may be exploited, e.g., the reconstructed pixels.

Thus, in accordance with embodiments, the prior data is compared to a certain threshold for determining whether or not the one or more MTT splits are applicable on the current block, and the prior data may represent or define one or more parameters of a previously coded block. As mentioned above, the one or more parameters of the previously coded block may include one or more of the following:

- One or more horizontal parameters, like a width of the previously coded block.
- One or more vertical parameters, like a height of the previously coded block.
- A depth of the previously coded block, e.g., a partitioning depth, which is the number of times a split is applied to reach the final block. The partitioning depth may also be split- specific such as a QT depth, a BT depth, a TT depth or a MTT depth.
- An intra prediction mode (IPM) used during coding of the previously coded block. For example the inventive determination may depend on a relation between the IPM for a specific direction and the partitioning. For instance, if the reference block uses horizontal IPMs, the vertical or horizontal splits may be deactivated.

- One or more reconstructed pixels of the previously coded block. For example, a Sobel filter may be used to determine a tendency of the block to disable horizontal, vertical, or both splits.

In accordance with embodiments, the prior data may represent only one or more horizontal parameters, like the width or an IPM direction. For instance if the IPM direction is horizontal there are no MTT horizontal splits. In such embodiments, it is determined only whether or not one or more vertical MTT splits are applicable on the current block. In accordance with other embodiments, the prior data may represent only one or more vertical parameters, like the height or an IPM direction. For instance if the IPM direction is vertical there are no MTT vertical splits. In such embodiments, it is determined only whether or not one or more horizontal MTT splits are applicable on the current block.

In accordance with embodiments, the certain threshold may be set between a maximal parameter value and a minimal parameter value. For example, the threshold may be defined in a specification of a codec used for processing the block or may be signaled in a data stream, like a bitstream, including data representing the picture, e.g., at a Sequence Parameter Set, SPS, level or at a Picture Parameter Set, PPS, level.

In accordance with embodiments, since the current blocks may have different sizes, the certain threshold may be set dependent on the size of the current block, e.g., a specific threshold may be defined for a specific size. For example, when considering a square current block with width and height equal the threshold may be set to width >> 1, with >> being a bit shifting to the right. >> 1 is doing the bit shifting operation to the right one time. When the width and height are not equal, the min value from the width and height may be taken and shifted 1 bit to the right, i.e., threshold = min(width,height) >> 1. In accordance with other embodiments, the certain threshold may be defined based on the direction of the split, e.g., for horizontal and vertical MTT splits , and/or on the MTT split, e.g., split-wise. For instance, when defining a specific threshold for BT and TT: a higher threshold may be used for TT. For example, the thresholds may be set as follows:

- Threshold for BT: min(width,height) >> 2.
- Threshold for TT: min(width,height) >> 1.

With reference to Fig. 18(A) using two blocks as reference blocks and assuming that as parameters (prior data) the width and height of each reference block are exploited, embodiments for determining whether or not MTT split(s) are applied to the current block are now described, which make use of those four prior data / parameters, i.e., the width of the first reference block 350, the height of the first reference block 350, the width of the second reference block 352 and the height of the second reference block 350.

In accordance with an embodiment, if all four prior data are inferior to the threshold, the result of the inventive determination is set to 1 meaning that no MTT splits are performed on the current block. For example, any flags concerning MTT splits may be implicitly determined to have a value, like "0", indicating that no MTT split is performed so that any processing of MTT splits is omitted for the current block.

In accordance with another embodiment, the inventive determination may include two decisions, namely a horizontal decision and a vertical decision. Then different tests may be applied:

(1) If both widths are inferior to the respective threshold, the result of the inventive determination is set to 1 for the vertical MTT splits meaning that no vertical MTT splits are performed on the current block.

(2) If both heights are inferior to the respective threshold, the result of the inventive determination is set to 1 for the horizontal MTT splits meaning that no horizontal MTT splits are performed on the current block.

In accordance with yet other embodiments, if only one of the width or height from a reference block is inferior to the threshold, the inventive determination is set to 1 meaning that no MTT splits are performed on the current block.

In accordance with further embodiments, the width and height from the two reference blocks may be considered separately to make the decision. Yet a further embodiment is to compute the mean or the median between the selected prior data.

Thus, according to embodiments only one parameter (prior data) is obtained from only one previous block, is compared to the threshold, and no MTT split is applied on the current block when the parameter is inferior to the threshold.

In accordance with other embodiments, two or more parameters (prior data) are obtained from only one previous block, are compared to respective thresholds for the parameters, and no MTT split is applied on the current block when

- all of the parameters are inferior to the respective certain thresholds, or
- one or more but not all of the parameters are inferior to the respective certain thresholds, or
- only one of the parameters is inferior to the respective certain thresholds

In accordance with other embodiments, at least one parameter (prior data) is obtained from each of two or more previous blocks and the (same or different) parameters are compared to respective thresholds for the parameters: no MTT split is applied on the current block when

- all of the parameters are inferior to the respective certain thresholds, or
- one or more but not all of the parameters are inferior to the respective certain thresholds, or
- only one of the parameters is inferior to the respective certain thresholds.

Some or more of the parameters obtained from the previously coded blocks are different, or some or all of the parameters obtained from the previously coded blocks are the same, and some or all of the same parameters may are combined, e.g., by determining a mean value or a median value of the parameters.

In accordance with yet other embodiments, the same parameter (prior data) is obtained from each of two or more previous blocks, the parameters are combined and compared to the threshold. No MTT split is applied on the current block when the combined parameter is inferior to the certain threshold.

*Signaling aspect*

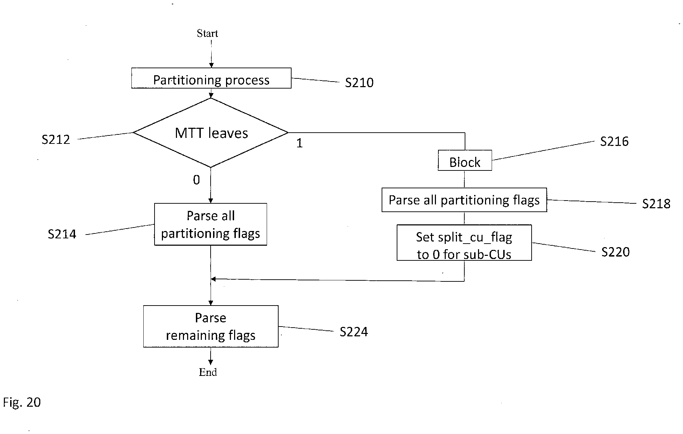

In accordance with embodiments, the current block may be considered an eligible block when the current block allows a MTT split only once, i.e., if a MTT split is performed on the current block and the sub-blocks created by this split are not allowed to be further split (leaf restriction). Fig. 20 illustrates a flow diagram of a parsing process of the partitioning when a leaf restriction is applied. The partitioning process starts at S210. At S212 it is determined whether the leaf restriction is applied ("1") or not ("0"). If leaf restriction is not applied all partitioning flags are parsed S214. After parsing the partitioning flags the process may go back to S210, e.g., if the MTT leave restriction is not applicable at a CTU size 256 but at a CTU size 128 this allows applying a MTT leave restriction at a CTU size 128. If leaf restriction is applied, the current block is considered S216 an eligible block. For the eligible block all partitioning flags are parsed S218. If a split selected is MTT, the split_cu_flag is set to 0 for the sub-CUs S220, thereby avoiding any further MTT splits. If the split selected is QT or no split, then the process goes back to S210. At S224 remaining flags associated with the processing of the current block are parsed.

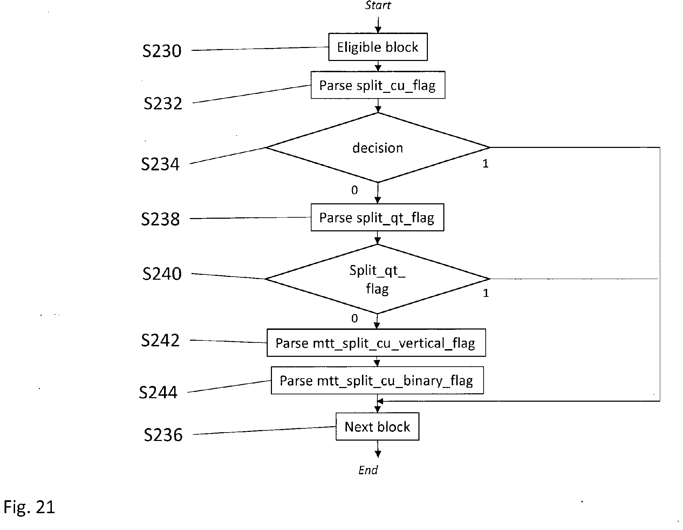

In accordance with the present disclosure, MTT splits for eligible blocks are avoided when they are considered inefficient. In accordance with embodiments, if it is determined that no MTT split is applied on the eligible block, no MTT related flags are send. In other words, only a split_cu_flag is sent to determine if the current block is QT split or is not split. Fig. 21 illustrates a parsing process in accordance with embodiments of the present disclosure. At S230 it is determined that the block is an eligible block S230, e.g., when the current block is a leaf node of a coding tree or is a block eligible for splitting. Then the split_cu_flag is parsed S230. For example, the split_cu_flag, indicating that the current block is a leaf node of a coding tree or is a block eligible for splitting may be included in a data stream. For example, responsive to determining that the current block is a leaf node, the partitioning flag, e.g., the split_cu_flag, may be set to indicate that the current block is a leaf node of the coding tree, and the determination whether or not the one or more MTT splits are applicable on the current block is skipped. On the other hand, responsive to determining that the current block is a block eligible for splitting, the partitioning flag, e.g., the split_cu_flag, may be set to indicate that the current block is a block eligible for splitting, and the inventive decision or determination whether or not the one or more MTT splits are applicable on the current block may be applied.

At S234 the inventive decision is applied, i.e., it is determined whether a MTT split is applied ("0") or is not applied ("1") on the current block. If the MTT split is not applied, the rest of the flags are not parsed, the split_qt flag may be implicitly determined as 1, and the process continues with the next block S236. Otherwise, the rest of the flags related to partitioning are parsed and processed as is indicated at S238, S240, S242 and S244.

In accordance with another embodiment, after parsing the split_cu_flag and when no MTT is applied, instead of deriving the rest of the partitioning flags implicitly, the split_qt flag may be explicitly send or signaled as 1.

In accordance with embodiments, when considering, e.g., an encoder perspective, responsive to determining that one or more of the MTT splits are applicable on the current block, the one or more or all MTT splits are applied on the current block, associated MTT partitioning flags for the current block are set to a value indicating that MTT partitioning is applied on the current block, e.g., one or more of a split_qt_flag, a mtt_split_cu_vertical_flag and a mtt_split_cu_binary_flag, and the MTT partitioning flags are included into a data stream. On the other hand, responsive to determining that one or more or all of the MTT splits are not applicable on the current block,

- the one or more or all MTT splits are not applied on the current block, and no associated MTT partitioning flag is included into the data stream, or
- the one or more or all MTT splits are not applied on the current block, associated MTT partitioning flags for the current block are set to a value indicating that no MTT partitioning is applied on the current block, and the MTT partitioning flags are included into the data stream.

In accordance with embodiments, when considering, e.g., a decoder perspective, a data stream, like a bitstream, including data representing the current block, is received, and, responsive to determining that one or more or all of the MTT splits are applicable on the current block, the data stream is parsed for associated MTT partitioning flags for the current block, e.g., one or more of a split_qt flag, a mtt_split_cu_vertical_flag and a mtt split cu binary_flag. The one or more or all MTT splits are applied on the current block according to the parsed MTT partitioning flags. When determining that one or more or all of the MTT splits are not applicable on the current block,

- the data stream is not parsed for associated MTT partitioning flags for the current block, and the one or more or all of the MTT splits are not applied on the current block, or
- the data stream is parsed for MTT partitioning flags for the current block, and no MTT splits are applied which are associated with MTT partitioning flags having a value indicating that no MTT partitioning is applied.

*Non normative early termination*

In accordance with further embodiments, e.g., to further reduce the encoding time of the eligible blocks, an early termination may be performed. The early termination is based on a previously encoded QT split and its corresponding full tree process. According to embodiments, the early termination is performed at the encoder side only, i.e., it is not a normative modification. In other words, the signaling does not change and if the early termination is applied the split_qt_flag is explicitly sent as 1.

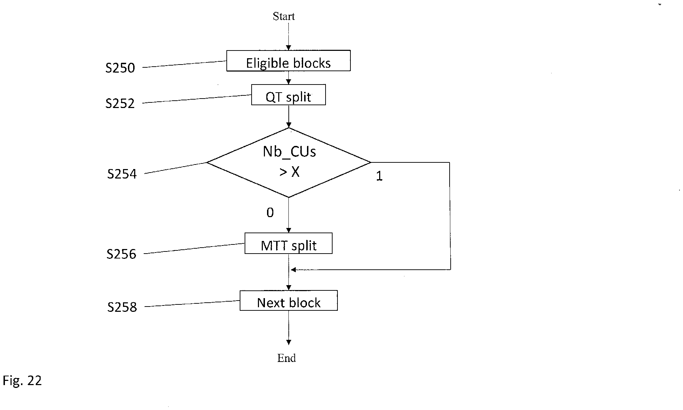

Fig. 22 illustrates a flow diagram of an early termination process of MTT splits on eligible blocks in accordance with embodiments of the present disclosure. If a block is considered an eligible block S250 and the QT split S252 is performed with its full partitioning tree, it is determined at S254 if the best partitioning determined through the QT split has a number of CUs > X. If yes ("1") the MTT splits tests are skipped, otherwise ("0") the MTT split tests are performed S256, i.e., the inventive determination whether or not the one or more MTT splits are applicable on the current block is performed. Then the process proceeds to the next block S258. X may have various values depending on the complexity-vs-performance trade-off desired. X may also have different values according to a size of the current block or for each split. For example, the threshold may be defined as follows:

$$(4 * (9 - \log2(\min(width, height)))),$$

with the width being the width of the current block and the height being the height of the current block.

In other words, Fig. 22 illustrates a process in accordance with which it is determined whether or not the inventive approach is applied/enabled, e.g., only when a current block is split in less than a certain number of CUs. When the current block is a block eligible for non-MTT splitting, e.g., QT splitting, the inventive determination whether or not one or more MTT splits are to performed is enabled only when a number of coding units, CUs, which is obtainable by partitioning the current block by non-MTT splitting, is equal to or less than of a predefined or signaled threshold. In accordance with embodiments, when the number of CUs is greater than the predefined or signaled threshold, no MTT split is on the current block, a MTT partitioning flag for the current block, e.g., a split_qt_flag, is set to a value indicating that no MTT partitioning is applied on the current block, and the MTT partitioning flag is included into a data stream.

In accordance with other embodiments, the inventive approach is applied/enabled responsive to a signaling in a data stream, like a bitstream, including data representing the picture, e.g., at a Sequence Parameter Set, SPS, level or at a Picture Parameter Set, PPS, level.

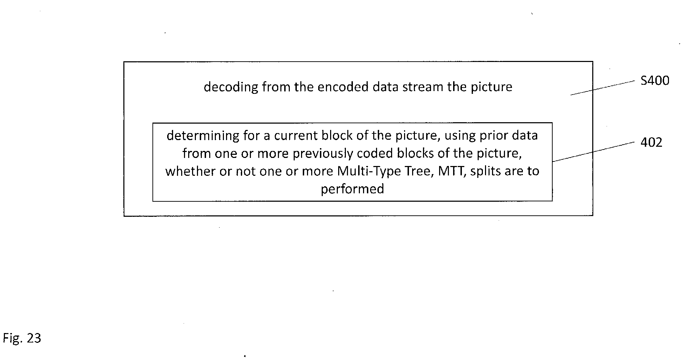

Fig. 23 illustrates a flow diagram of a method for decoding an encoded data stream, the encoded data stream including data representing a picture, in accordance with a first embodiment. The method includes the following: S400: Decoding from the encoded data stream the picture. Decoding the picture comprises processing one or more blocks of the picture. The one or more blocks include one or more Multi-Type Tree, MTT, restricted blocks, and the processing includes determining S402 for a current block of the picture, using prior data from one or more previously coded blocks of the picture, whether or not one or more Multi-Type Tree, MTT, splits are to be performed.

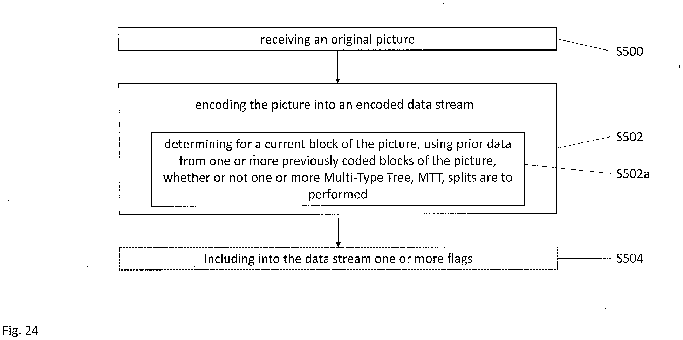

Fig. 24 illustrates a flow diagram of a method for encoding a picture into an encoded data stream, in accordance with a first embodiment. The encoded data stream includes data representing the picture and the method includes the following:

S500: Receiving an original picture.
S502: Encoding the picture into the encoded data stream.

Encoding the picture comprises processing one or more blocks of the picture. The processing includes determining S502a for a current block of the picture, using prior data from one or more previously coded blocks of the picture, whether or not one or more Multi-Type Tree, MTT, splits are to be performed. Optionally, the method comprises including S504 into the data stream or bitstream one or more partitioning flags, like the ones described above with reference to Fig. 5.

Further embodiments

So far, the inventive concept has been described with reference to aspects and embodiments concerning methods of processing one or more blocks of a picture, e.g., for decoding and for encoding. In accordance with further embodiments, the present disclosure also provides an apparatus of processing one or more blocks of a picture as well as encoders/decoders including such an apparatus.

Fig. X1 illustrates a block diagram of an apparatus of processing one or more blocks of a picture in accordance with a first embodiment of the present disclosure. The apparatus 400 includes the following modules: 402: A processing module for determining for a current block of the picture, using prior data from one or more previously coded blocks of the picture, whether or not one or more Multi-Type Tree, MTT, splits are to be performed. In accordance with embodiments, the one or more blocks comprise one or more MTT

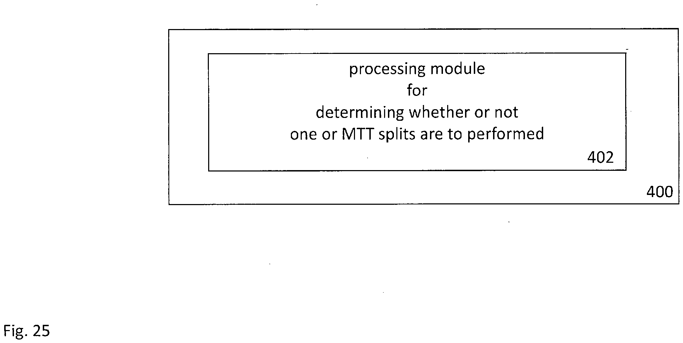

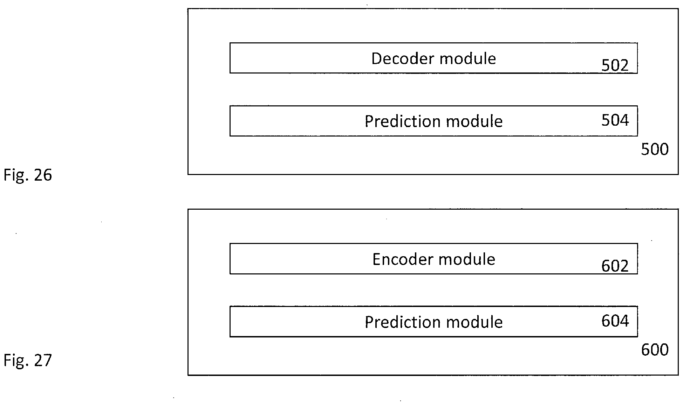

Fig. 26 illustrates a block diagram of a decoder for decoding an encoded data stream in accordance with embodiments of the present disclosure. The encoded data stream includes data representing a picture. The decoder 500 includes the following modules: 502: A decoder module configured to decode from the encoded data stream the picture. 504: A prediction module, e.g., a prediction module 170 as depicted in Fig. 2. The decoder 500 is configured to operate in accordance with embodiments of the present disclosure. For example, the decoder 500 includes an apparatus as described with reference to Fig. 25.

Fig. 27 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.
604: A prediction module, e.g., a prediction module 124 as depicted in Fig. 1. The prediction module 604 is configured to operate in accordance with embodiments of the present disclosure. For example, the encoder 600 includes an apparatus as described with reference to Fig. 25.

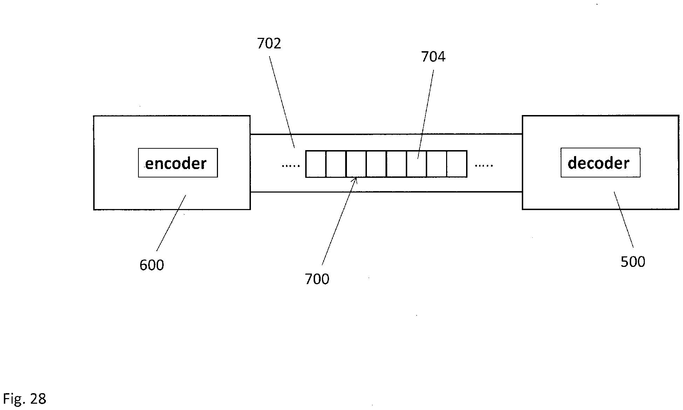

Fig. 28 illustrates a data stream 700 in accordance with embodiments of the present disclosure, which has encoded thereinto a picture and information data associated with the picture. In general, the data stream may have encoded thereinto information representing a picture and/or information being associated with encoding/decoding the picture. For example, the data stream or bitstream 700 may be provided by an encoder 600 that performs the inventive method for encoding the picture into the data stream 700. The data stream 700 is transmitted to a decoder 500 via a wired or wireless transmission medium 702, like cable or a radio link, and the decoder 500 decodes from the data stream 700 the picture. The data stream includes one or more flags 704 indicating whether or not the inventive determination is enabled, i.e., if it is to be determined for a current block of the picture, using prior data from one or more previously coded blocks of the picture, whether or not one or more Multi-Type Tree, MTT, splits are to performed. In accordance with further embodiments, the data stream 700 may include one or more partitioning flags, like the ones described above with reference to Fig. 5.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

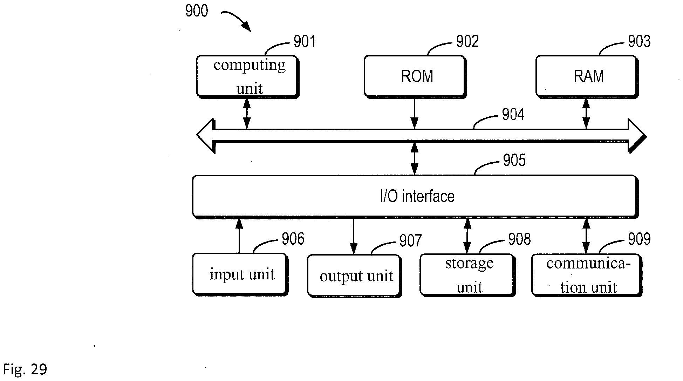

Fig. 29 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user,

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, comprising: determining for a current block of the picture, using prior data from one or more previously coded blocks of the picture, whether or not one or more Multi-Type Tree, MTT, splits are to be performed.

A 2nd embodiment provides the method of the 1st embodiment, wherein the current block allows only a predefined or signaled number of MTT splits.

A 3rd embodiment provides the method of the 2nd embodiment, wherein no split is applied to a sub-block which is obtained from a last one of the MTT splits of the current block.

A 4th embodiment provides the method of the 2nd embodiment or 3rd embodiment, wherein the number of consecutive MTT splits is one and the current block allows a MTT split only once so that, when the MTT split is performed on the block, no further split of any sub-block created by the MTT split is allowed.

A 5th embodiment provides the method of any one of the preceding embodiments, wherein a parent block of the current block has not been obtained by a MTT split, wherein, optionally, the parent block is a root node of a coding tree or is a node obtained by a quad Tree, QT, split.

A 6th embodiment provides the method of any one of the preceding embodiments, wherein the current block is a MTT restricted block.

A 7th embodiment provides the method of the 6th embodiment, wherein

- when the current block has a size smaller than a predefined or signaled threshold, the current block is a MTT unrestricted block, and
- when the current block has a size larger than or equal to a predefined or signaled threshold, the current block is a MTT restricted block.

An 8th embodiment provides the method of any one of the preceding embodiments, wherein the prior data is used to determine whether QT and/or MTT splits on are allowed for the current block or whether only quad Tree, QT splits, are allowed for the current block.

A 9th embodiment provides the method of any one of the preceding embodiments, wherein the prior data is compared to a certain threshold for determining whether or not the one or more MTT splits are applicable on the current block.

A 10th embodiment provides the method of any one of the preceding embodiments, wherein the prior data represent one or more parameters of a previously coded block.

An 11th embodiment provides the method of the 10th embodiment, wherein

- only one parameter is obtained from only one previously coded block,
- the parameter is compared to the certain threshold, and
- no MTT split is applied on the current block when the parameter is inferior to the certain threshold.

A 12th embodiment provides the method of the 10th embodiment, wherein

- two or more parameters are obtained from only one previously coded block,
- the parameters are compared to respective certain thresholds associated with the parameters, and
- no MTT split is applied on the current block when

  ○ all of the parameters are inferior to the respective certain thresholds, or
  ○ one or more but not all of the parameters are inferior to the respective certain thresholds, or
  ○ only one of the parameters is inferior to the respective certain thresholds.

A 13th embodiment provides the method of the 10th embodiment, wherein

- at least one parameter is obtained from each of two or more previously coded blocks,
- the parameters are compared to respective certain thresholds associated with the parameters, and
- no MTT split is applied on the current block when

  ○ all of the parameters are inferior to the respective certain thresholds, or
  ○ one or more but not all of the parameters are inferior to the respective certain thresholds, or
  ○ only one of the parameters is inferior to the respective certain thresholds.

A 14th embodiment provides the method of the 13th embodiment, wherein

- some or more of the parameters obtained from the previously coded blocks are different, or
- some or all of the parameters obtained from the previously coded blocks are the same.

A 15th embodiment provides the method of the 14th embodiment, wherein some or all of the same parameters are combined, e.g., by determining a mean value or a median value of the parameters.

A 16th embodiment provides the method of the 10th embodiment, wherein

- wherein the same parameter is obtained from each of two or more previously coded block,
- wherein the parameters are combined for obtaining a combined parameter, e.g., by determining a mean value or a median value of the parameters,
- the combined parameter is compared to a certain threshold associated with the combined parameters, and
- no MTT split is applied on the current block when the combined parameter is inferior to the certain threshold.

A 17th embodiment provides the method of any one of the 10th to 16th embodiments, wherein the one or more parameters of the previously coded block comprises one or more of the following:

- one or more horizontal parameters, like a width of the previously coded block,
- one or more vertical parameters, like a height of the previously coded block,
- a depth of the previously coded block,
- an intra prediction mode used during coding of the previously coded block,

- one or more reconstructed pixels of the previously coded block.

An 18th embodiment provides the method of any one of the 10th to 16th embodiments, wherein

- when the prior data represents only one or more horizontal parameters, it is determined only whether or not one or more horizontal MTT splits are applicable on the current block,
- when the prior data represents only one or more vertical parameters, it is determined only whether or not one or more vertical MTT splits are applicable on the current block.

A 19th embodiment provides the method of any one of the 9th to 18th embodiments, wherein

the certain threshold is between a maximal parameter value and a minimal parameter value, and
the certain threshold is defined in a specification of a codec used for processing the block or is signaled in a data stream, like a bitstream, including data representing the picture, e.g., at a Sequence Parameter Set, SPS, level or at a Picture Parameter Set, PPS, level.

A 20th embodiment provides the method of any one of the 9th to 18th embodiments, wherein the certain threshold is defined based on

- the direction of the split, e.g., for horizontal and vertical MTT splits , and/or
- the MTT split, e.g., split-wise.

A 21st embodiment provides the method of any one of the preceding embodiments, wherein the one or more MTT splits comprise one or more of the following:

- a vertical binary split, SPLIT_BT_VER,
- a horizontal binary split, SPLIT_BT_HOR,
- a vertical ternary split, SPLIT_TT_VER,
- a horizontal ternary split, SPLIT_TT_HOR.

A 22nd embodiment provides the method of any one of the preceding embodiments, further comprising:

- responsive to determining that one or more or all of the MTT splits are applicable on the current block, applying the one or more or all MTT splits on the current block, setting associated MTT partitioning flags for the current block to a value indicating that MTT partitioning is applied on the current block, e.g., one or more of a split_qt_flag, a mtt_split_cu_vertical_flag and a mtt split cu binary_flag, and including the MTT partitioning flags into a data stream,
- responsive to determining that one or more or all of the MTT splits are not applicable on the current block,

  ○ not applying the one or more or all MTTs split on the current block, and not including associated MTT partitioning flag into the data stream, or
  ○ not applying the one or more or all MTT splits on the current block, setting associated MTT partitioning flags for the current block to a value indicating that MTT partitioning is not applied on the current block, and including the MTT partitioning flags into the data stream.

A 23rd embodiment provides the method of the 22nd embodiment, further comprising, prior to determining whether or not the one or more MTT splits are applicable on the current block:

- determining whether the current block is a leaf node of a coding tree or is a block eligible for splitting,
- including into the data stream a partitioning flag, e.g., a split_cu_flag, indicating whether the current block is a leaf node of a coding tree or is a block eligible for splitting.

A 24th embodiment provides the method of the 23rd embodiment, wherein

- responsive to determining that the current block is a leaf node, setting the partitioning flag, e.g., the split_cu_flag, to indicate that the current block is a leaf node of the coding tree, and skipping the determination whether or not the one or more MTT splits are applicable on the current block, and
- responsive to determining that the current block is a block eligible for splitting, setting the partitioning flag, e.g., the split_cu_flag, to indicate that the current block is a block eligible for splitting, and performing the determination whether or not the one or more MTT splits are applicable on the current block.

A 25th embodiment provides the method of any one of the 1st to 21st embodiments, further comprising:

- receiving a data stream, like a bitstream, including data representing the current block,
- responsive to determining that one or more or all of the MTT splits are applicable on the current block, parsing the data stream for associated MTT partitioning flags for the current block, e.g., one or more of a split_qt_flag, a mtt_split_cu_vertical_flag and a mtt_split_cu_binary_flag, and applying the one or more or all MTT splits on the current block according to the parsed MTT partitioning flags,
- responsive to determining that one or more or all of the MTT splits are not applicable on the current block,

  ○ not parsing the data stream for associated MTT partitioning flags for the current block, and not applying the one or more or all MTT split on the current block, or
  ○ parsing the data stream for MTT partitioning flags for the current block, and not applying the MTT splits associated with MTT partitioning flags having a value indicating that no MTT partitioning is applied.

A 26th embodiment provides the method of the 25th embodiment, further comprising, prior to determining whether or not the one or more MTT splits are applicable on the current block:

- parsing from the data stream a partitioning flag, e.g., a split_cu_flag, indicating whether the current block is a leaf node of a coding tree or is a block eligible for splitting,
- responsive to the partitioning flag, e.g., the split_cu_flag, indicating that the current block is a leaf node of the coding tree, skipping the determination whether or not the one or more MTT splits are applicable on the current block, and
- responsive to the partitioning flag, e.g., the split_cu_flag, indicating that the current block is a block eligible for splitting, performing the determination whether or not the one or more MTT splits are applicable on the current block.

A 27th embodiment provides the method of any one of the preceding embodiments, wherein

- the current block is a block eligible for non-MTT splitting, e.g., QT splitting, and
- the determination whether or not one or more MTT splits are to performed is enabled only when a number of coding units, CUs, which is obtainable by partitioning the current block by non-MTT splitting, is equal to or less than of a predefined or signaled threshold.

A 28th embodiment provides the method of the 29th embodiment, wherein responsive to the number of CUs being greater than the predefined or signaled threshold,

- not applying any MTT split on the current block,
- setting a MTT partitioning flag for the current block, e.g., a split_qt_flag, to a value indicating that no MTT partitioning is applied on the current block, and
- including the MTT partitioning flag into a data stream.

A 29th embodiment provides the method of any one of the preceding embodiments, wherein the determination whether or not one or more MTT splits are to performed is enabled responsive a signaling in a data stream, like a bitstream, including data representing the picture, e.g., at a Sequence Parameter Set, SPS, level or at a Picture Parameter Set, PPS, level.

A 30th embodiment provides the method of any one of the preceding embodiments, wherein the one or more previously coded blocks of the picture comprise one or more neighboring blocks of the current block.

A 31st embodiment provides the method of the 30th embodiment, wherein the one or more neighboring blocks comprise blocks which are adjacent and/or non-adjacent to the current block.

A 32nd embodiment provides the method of the 30th embodiment or 31st embodiment, wherein the one or more neighboring blocks are non-partitioned and/or partitioned blocks.

A 33<sup>rd</sup> embodiment provides the method of the 32<sup>nd</sup> embodiment, wherein the one or more neighboring blocks are partitioned blocks which vary in size, wherein the size may go from a CTU size to a 4x4 dimensions depending on the partitioning of the blocks.

A 34<sup>th</sup> embodiment provides the method of any one of the 30<sup>th</sup> to 33<sup>rd</sup> embodiments, wherein the neighboring blocks comprise:

- two blocks adjacent to the current block and closest to a top-left pixel of the current block, e.g., a first adjacent block on a top of the current block and a second adjacent block on a left of the current block, or
- all blocks adjacent to the current block and located on a top of the current block and on a left of the current block, or
- one or more blocks from coding tree units, CTUs, which are adjacent to the current block and located on a top-left of the current block, on a top of the current block and on a left of the current block.

A 35<sup>th</sup> embodiment provides the method of the 34<sup>th</sup> embodiment, wherein each of the CTUs comprises one or more coding units, CUs, and the one or more blocks from the CTUs comprise all blocks from CUs which are adjacent to the current block and located on a top-left of the current block, on a top of the current block and a second adjacent block on a left of the current block.

A 36<sup>th</sup> embodiment provides a method for decoding an encoded data stream, the encoded data stream including data representing a picture, the method comprising:

decoding from the encoded data stream the picture,
wherein decoding the picture comprises processing one or more blocks according to the method of any one of the preceding embodiments.

A 37<sup>th</sup> embodiment provides a method for encoding a picture into an encoded data stream, the encoded data stream including data representing the picture, the method comprising:

receiving an original picture, and
encoding the picture into the encoded data stream,
wherein encoding the picture comprises processing one or more blocks according to the method of any one of the preceding embodiments.

A 38<sup>th</sup> embodiment provides a non-transitory computer-readable storage medium comprising instructions which, when executed by a computer, cause the computer to carry out the method of any one of the preceding embodiments.

A 39<sup>th</sup> embodiment provides an apparatus of processing one or more blocks of a picture, the apparatus comprising: a processing module for determining for a current block of the picture, using prior data from one or more previously coded blocks of the picture, whether or not one or more Multi-Type Tree, MTT, splits are to be performed.

A 40<sup>th</sup> embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to claim 39<sup>th</sup> embodiment.

A 41<sup>st</sup> embodiment provides an apparatus for encoding a picture into an encoded data stream, the encoded data stream including data representing the picture, the apparatus comprising:

an encoder module configured to receive the original picture and to encode the picture into the encoded data stream, and
a prediction module, the prediction module including an apparatus according to claim 39 the embodiment.

A 42<sup>nd</sup> embodiment provides a data stream having encoded thereinto a picture, wherein the data stream comprises one of more of the following:
one or more flags indicating whether or not it is to be determined for a current block of the picture, using prior data from one or more previously coded blocks of the picture, whether or not one or more Multi-Type Tree, MTT, splits are to be performed.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] H.264: Advanced video coding for generic audio-visual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-2018-I/en
[4] AV1 Bitstream & Decoding Process Specification, http://aomedia.org/av1/specification/
[5] Algorithm description of Enhanced Compression Model 12 (ECM 12), document JVET-AG2025, https://jvet-experts.org/doc_end_user/documents/33_Teleconference/wg11/JVET-AG2025-v1.zip

## Claims

1.  A method of processing one or more blocks of a picture, comprising:
    determining for a current block of the picture, using prior data from one or more previously coded blocks of the picture, whether or not one or more Multi-Type Tree, MTT, splits are to be performed.

2.  The method of claim 1, wherein

    the current block allows only a predefined or signaled number of MTT splits, and
    optionally, the number of consecutive MTT splits is one and the current block allows a MTT split only once so that, when the MTT split is performed on the block, no further split of any sub-block created by the MTT split is allowed.

3.  The method of any one of the preceding claims, wherein the current block is a MTT restricted block.

4.  The method of any one of the preceding claims, wherein

    the prior data is compared to a certain threshold for determining whether or not the one or more MTT splits are applicable on the current block, and
    wherein the prior data represent one or more parameters of a previously coded block.

5.  The method of claim 4, wherein

    the prior data is compared according to a process (a) or according to a process (b) or according to a process (c) or according to a process (d),
    wherein according to process (a):

        - only one parameter is obtained from only one previously coded block,
        - the parameter is compared to the certain threshold, and
        - no MTT split is applied on the current block when the parameter is inferior to the certain threshold,

    wherein according to process (b):

        - two or more parameters are obtained from only one previously coded block,
        - the parameters are compared to respective certain thresholds associated with the parameters, and
        - no MTT split is applied on the current block when

            ○ all of the parameters are inferior to the respective certain thresholds, or
            ○ one or more but not all of the parameters are inferior to the respective certain thresholds, or
            ○ only one of the parameters is inferior to the respective certain thresholds,

wherein according to process (c):

- at least one parameter is obtained from each of two or more previously coded blocks,
- the parameters are compared to respective certain thresholds associated with the parameters, and
- no MTT split is applied on the current block when

  ○ all of the parameters are inferior to the respective certain thresholds, or
  ○ one or more but not all of the parameters are inferior to the respective certain thresholds, or
  ○ only one of the parameters is inferior to the respective certain thresholds,

wherein according to process (d):

- the same parameter is obtained from each of two or more previously coded block,
- the parameters are combined for obtaining a combined parameter, e.g., by determining a mean value or a median value of the parameters,
- the combined parameter is compared to a certain threshold associated with the combined parameters, and
- no MTT split is applied on the current block when the combined parameter is inferior to the certain threshold.

6. The method of claim 4 or 5, wherein the one or more parameters of the previously coded block comprises one or more of the following:

- one or more horizontal parameters, like a width of the previously coded block,
- one or more vertical parameters, like a height of the previously coded block,
- a depth of the previously coded block,
- an intra prediction mode used during coding of the previously coded block,
- one or more reconstructed pixels of the previously coded block.

7. The method of any one of claims 4 to 6, wherein

the certain threshold is between a maximal parameter value and a minimal parameter value, and
the certain threshold is defined in a specification of a codec used for processing the block or is signaled in a data stream, like a bitstream, including data representing the picture, e.g., at a Sequence Parameter Set, SPS, level or at a Picture Parameter Set, PPS, level.

8. The method of any one of claims 4 to 7, wherein the certain threshold is defined based on

- the direction of the split, e.g., for horizontal and vertical MTT splits , and/or
- the MTT split, e.g., split-wise.

9. The method of any one of the preceding claims, further comprising:

- responsive to determining that one or more or all of the MTT splits are applicable on the current block, applying the one or more or all MTT splits on the current block, setting associated MTT partitioning flags for the current block to a value indicating that MTT partitioning is applied on the current block, e.g., one or more of a split_qt_flag, a mtt_split_cu_vertical_flag and a mtt_split_cu_binary_flag, and including the MTT partitioning flags into a data stream,
- responsive to determining that one or more or all of the MTT splits are not applicable on the current block,

  ○ not applying the one or more or all MTT splits on the current block, and not including associated MTT partitioning flags into the data stream, or
  ○ not applying the one or more or all MTT splits on the current block, setting associated MTT partitioning flags for the current block to a value indicating that MTT partitioning is not applied on the current block, and including the MTT partitioning flags into the data stream.

10. The method of any one of the preceding claims, further comprising:

- receiving a data stream, like a bitstream, including data representing the current block,
- responsive to determining that one or more or all of the MTT splits are applicable on the current block, parsing the data stream for associated MTT partitioning flags for the current block, e.g., one or more of a split_qt_flag, a mtt_split_cu_vertical_flag and a mtt_split_cu_binary_flag, and applying the one or more or all MTT splits on the current block according to the parsed MTT partitioning flags,
- responsive to determining that one or more of the MTT splits are not applicable on the current block,

  ◦ not parsing the data stream for associated MTT partitioning flags for the current block, and not applying the one or more or all MTT split on the current block, or
  ◦ parsing the data stream for MTT partitioning flags for the current block, and not applying the MTT splits associated with MTT partitioning flags having a value indicating that no MTT partitioning is applied.

11. The method of any one of the preceding claims, wherein

    - the current block is a block eligible for non-MTT splitting, e.g., QT splitting, and
    - the determination whether or not one or more MTT splits are to performed is enabled only when a number of coding units, CUs, which is obtainable by partitioning the current block by non-MTT splitting, is equal to or less than of a predefined or signaled threshold.

12. The method of claim 11, wherein responsive to the number of CUs being greater than the predefined or signaled threshold,

    - not applying any MTT split on the current block,
    - setting a MTT partitioning flag for the current block, e.g., a split_qt_flag, to a value indicating that no MTT partitioning is applied on the current block, and
    - including the MTT partitioning flag into a data stream.

13. The method of any one of the preceding claims,

    wherein the one or more previously coded blocks of the picture comprise one or more neighboring blocks of the current block, and
    wherein the neighboring blocks comprise:

    - two blocks adjacent to the current block and closest to a top-left pixel of the current block, e.g., a first adjacent block on a top of the current block and a second adjacent block on a left of the current block, or
    - all blocks adjacent to the current block and located on a top of the current block and on a left of the current block, or
    - one or more blocks from coding tree units, CTUs, which are adjacent to the current block and located on a top-left of the current block, on a top of the current block and on a left of the current block.

14. A non-transitory computer-readable storage medium comprising instructions which, when executed by a computer, cause the computer to carry out the method of any one of the preceding claims.

15. An apparatus of processing one or more blocks of a picture, the apparatus comprising: a processing module for determining for a current block of the picture, using prior data from one or more previously coded blocks of the picture, whether or not one or more Multi-Type Tree, MTT, splits are to performed.

Fig. 1

Fig. 2

| SPLIT_QT | SPLIT_BT_HOR | SPLIT_BT_VER | SPLIT_TT_HOR | SPLIT_TT_VER |
|----------|--------------|--------------|--------------|--------------|
| (A) | (B) | (C) | (D) | (E) |

Fig. 3

Fig. 4

Fig. 5

Fig. 6

| Enabling one or more MTT splits for one or more MTT restricted blocks |
|---|

S100

Fig. 7

| Applying one or more restrictions to one or more sub-blocks obtained by applying a MTT split to the one or more blocks |
|---|

S102

| Enabling one or more MTT splits for one or more MTT restricted blocks |
|---|

S100

| Applying one or more restrictions to one or more sub-blocks obtained by applying a MTT split to the one or more blocks |
|---|

S102

Fig. 8

300

NO_SPLIT    SPLIT_QT    SPLIT_BT_HOR    ...    SPLIT_TT_HOR    SPLIT_TT_VER

Existing non-MTT splits 302                    New MTT splits 304

Fig. 9

300

NO_SPLIT   SPLIT_QT   SPLIT_BT_HOR   SPLIT_BT_VER   SPLIT_TT_HOR   SPLIT_TT_VER

Existing non-MTT splits 302

New MTT splits including
both BT and TT 306

Fig. 10

NO_SPLIT    SPLIT_QT    SPLIT_BT_HOR    SPLIT_BT_VER

Existing non-MTT splits 302    New MTT splits including only BT 308

(A)

NO_SPLIT    SPLIT_QT    SPLIT_TT_HOR    SPLIT_TT_VER

Existing non-MTT splits 302    New MTT splits including only TT 310

(B)

Fig. 11

MTT restricted block 300 / MTT unrestricted block 318

| No split | QT | BTH | BTV | TTH | TTV |

No
split
312

Follow
partitioning
process
314

No split
316

Fig. 12

MTT restricted block 300 / MTT unrestricted block 318

| No split 312 | QT | BTH | BTV | TTH | TTV 320 |

Follow partitioning process 314

| BTH | BTV | TTH | TTV 322 |

No split 316

Fig. 13

300/318

Currently
allowed
no split

Currently
allowed
QT split

324

326

Allowed coding tools: Tool-A, Tool-B, Tool-C, Tool-D, Tool-E

Disallowed coding tools: None

(A)

300/318

Newly
allowed
BT split

328

Allowed coding tools: Tool-A, Tool-C, Tool-E

Disallowed coding tools: Tool-B, Tool-D

(B)

Fig. 14

Start

S150 — Parse split_qt_flag

S152 — Split_qt_flag — 0 — Parse mtt_split_cu_vertical_flag — S154

Parse mtt_split_cu_binary_flag — S156

1

S162 — Parse partitioning flags until sub-CUs are leaves

Set split_cu_flag to 0 for sub-CUs — S158

Parse remaining flags — S160

End

Fig. 15

determining for a current block of the picture, using prior data from one or more previously coded blocks of the picture, whether or not one or more Multi-Type Tree, MTT, splits are to performed

S200

Fig. 16

Fig. 17

Fig. 18(A)

Fig. 18(B)

Fig. 18(C)

Fig. 19

Start

Partitioning process ———— S210

MTT leaves

S212 ————

1

Block ———— S216

0

Parse all partitioning flags ———— S218

Parse all
partitioning flags

S214 ————

Set split_cu_flag
to 0 for sub-CUs ———— S220

Parse
remaining flags ———— S224

End

Fig. 20

S230 — Eligible block

S232 — Parse split_cu_flag

S234 — decision

S238 — Parse split_qt_flag

S240 — Split_qt_flag

S242 — Parse mtt_split_cu_vertical_flag

S244 — Parse mtt_split_cu_binary_flag

S236 — Next block

Fig. 21

Start

S250 —————— Eligible blocks

S252 —————— QT split

S254 —————— Nb_CUs > X

1

0

S256 —————— MTT split

S258 —————— Next block

End

Fig. 22

decoding from the encoded data stream the picture ———— S400

determining for a current block of the picture, using prior data from one or more previously coded blocks of the picture, whether or not one or more Multi-Type Tree, MTT, splits are to performed ———— 402

Fig. 23

receiving an original picture — S500

encoding the picture into an encoded data stream — S502

determining for a current block of the picture, using prior data from one or more previously coded blocks of the picture, whether or not one or more Multi-Type Tree, MTT, splits are to performed — S502a

Including into the data stream one or more flags — S504

Fig. 24

processing module
for
determining whether or not
one or MTT splits are to performed

402

400

Fig. 25

Fig. 26

| Decoder module | 502 |
|---|---|
| Prediction module | 504 |

500

Fig. 27

| Encoder module | 602 |
|---|---|
| Prediction module | 604 |

600

Fig. 28

Fig. 29

Europäisches
Patentamt

European
Patent Office

Office européen
des brevets

**EUROPEAN SEARCH REPORT**

**Application Number**

EP 24 31 5445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/049020 A1 (QUALCOMM INC [US]) 15 March 2018 (2018-03-15) | 1,3-8, 13-15 | INV. H04N19/119 |
| Y | * paragraph [0112] - paragraph [0113] * * paragraph [0140] - paragraph [0142]; figure 10 * | 9-12 | H04N19/176 H04N19/70 H04N19/96 |
| | ----- | | |
| X | US 2024/031613 A1 (ZHANG KAI [US] ET AL) 25 January 2024 (2024-01-25) * paragraph [0151] - paragraph [0156]; figures 18A-D * | 1,2,14, 15 | |
| | ----- | | |
| A | TISSIER (XIAOMI) A ET AL: "AHG 12: Rectangular Partitioning Restrictions", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI0261 9 July 2024 (2024-07-09), XP030320673, Retrieved from the Internet: URL:https://jvet-experts.org/doc_end_user/ documents/35_Sapporo/wg11/JVET-AI0261-v1.z ip JVET-AI0261-v1.docx [retrieved on 2024-07-09] * the whole document * | 3 | |
| | ----- | | |
| | -/-- | | |

**TECHNICAL FIELDS SEARCHED (IPC)**

H04N

The present search report has been drawn up for all claims

| Place of search | Date of completion of the search | Examiner |
|---|---|---|
| The Hague | 21 February 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 31 5445

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "Algorithm description of enhanced compression model 13 (ECM 13)", 146. MPEG MEETING; 20240422 - 20240426; RENNES; (MOTION PICTURE EXPERT GROUP OR ISO/IEC JTC1/SC29/WG11), , no. n23774 7 July 2024 (2024-07-07), XP030319997, Retrieved from the Internet: URL:https://dms.mpeg.expert/doc_end_user/documents/146_Rennes/wg11/MDS23774_WG05_N00294.zip WG5_N0294_JVET-AH2025-v1-ECM.docx [retrieved on 2024-07-07] * section [3.2.39 Temporal partitioning prediction]; page 70 - page 72 * | 9-12 | |

-----

|  |  |  | TECHNICAL FIELDS SEARCHED (IPC) |
|---|---|---|---|

The present search report has been drawn up for all claims

| Place of search | Date of completion of the search | Examiner |
|---|---|---|
| The Hague | 21 February 2025 | Georgiou, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5445

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | Publication date | Patent family member(s) | Publication date |
|---|---|---|---|
| WO 2018049020 A1 | 15-03-2018 | BR 112019003749 A2 | 21-05-2019 |
| | | CN 109644275 A | 16-04-2019 |
| | | EP 3510776 A1 | 17-07-2019 |
| | | JP 7218287 B2 | 06-02-2023 |
| | | JP 2019530316 A | 17-10-2019 |
| | | KR 20190044629 A | 30-04-2019 |
| | | SG 11201900438W A | 28-03-2019 |
| | | TW 201813386 A | 01-04-2018 |
| | | US 2018070110 A1 | 08-03-2018 |
| | | US 2020267418 A1 | 20-08-2020 |
| | | US 2021344970 A1 | 04-11-2021 |
| | | WO 2018049020 A1 | 15-03-2018 |
| US 2024031613 A1 | 25-01-2024 | CN 117321997 A | 29-12-2023 |
| | | US 2024031613 A1 | 25-01-2024 |
| | | WO 2022213988 A1 | 13-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24315306